(19) Europäisches Patentamt
European Patent Office
Office européen des brevets

(11) **EP 4 651 360 A1**

(12) **EUROPEAN PATENT APPLICATION**
published in accordance with Art. 153(4) EPC

(43) Date of publication:
**19.11.2025 Bulletin 2025/47**

(21) Application number: **23916057.5**

(22) Date of filing: **13.01.2023**

(51) International Patent Classification (IPC):
**H02M 7/49** *(2007.01)*    **H02M 7/48** *(2007.01)*

(52) Cooperative Patent Classification (CPC):
**H02M 7/48; H02M 7/49**

(86) International application number:
**PCT/JP2023/000883**

(87) International publication number:
**WO 2024/150437 (18.07.2024 Gazette 2024/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Hitachi Mitsubishi Hydro Corporation**
  **Tokyo 108-0014 (JP)**
• **Hitachi, Ltd.**
  **Tokyo 100-8280 (JP)**

(72) Inventors:
• **WATANABE, Kenta**
  **Tokyo 100-8280 (JP)**
• **BANDO, Akira**
  **Tokyo 108-0014 (JP)**
• **KIKUI, Takahiko**
  **Tokyo 100-8280 (JP)**
• **KIYOFUJI, Yasuhiro**
  **Tokyo 100-8280 (JP)**
• **ISHIKAWA, Masakazu**
  **Tokyo 100-8280 (JP)**

(74) Representative: **Meissner Bolte Partnerschaft
mbB**
**Patentanwälte Rechtsanwälte**
**Postfach 86 06 24**
**81633 München (DE)**

(54) **MODULAR MULTILEVEL POWER CONVERTER**

(57) There is provided a modular multilevel power converter suitable for continuing operation when system fault propagation occurs by rapidly suppressing imbalance of capacitor voltages between positive and negative side arms when asymmetric fault occurs by, as a positive/negative balance control method, generating circulating current command values of second harmonic proportional to result of multiplication of a positive sequence voltage phase of AC voltage with differential voltage between average voltages of the positive and negative-side arms of the capacitors of the unit converters in the modular multilevel power converter, comparing the circulating current command values and circulating current feedback values and performing three-phase to two-phase conversion with a phase that is twice the positive sequence voltage phase, performing proportional-integral control calculation to settle the circulating current feedback values to the circulating current command values, and then performing two-phase to three-phase inverse conversion and adding the resultant to the voltage commands to the positive and negative-side arms.

FIG.1

**Description**

Field

The present invention relates to a modular multilevel power converter (hereinafter, referred to as an "MMC converter" in the present invention). In particular, the present invention relates to a modular multilevel power converter suitable for configuring a variable speed generator-motor in which the DC sides of two MMC converters are connected back-to-back to form a frequency converter, an AC side of one of the MMC converters is connected to a power system, and an AC side of the other MMC converter is connected to an AC rotary electric machine.

Background

The circuit of the MMC converter includes unit converters that generate a required voltage by controlling modulation rates of PWM converters using energy storage elements having a voltage source characteristic, such as capacitors, as voltage sources. Hereinafter, in the present invention, a capacitor is assumed as the energy storage element, but the assumption does not impair the generality. The capacitor voltage of the unit converter varies by charging and discharging at a cycle determined by the AC frequency. Six two-terminal arms in each of which the unit converters are connected in series are provided, three of them are defined as positive-side arms, the first terminals thereof are connected to the respective phase terminals of the AC power supply, and the star-connected second terminals are connected to the positive-side terminal of the DC power supply. The remaining three arms are negative-side arms, the second terminals thereof are connected to the respective phase terminals of the AC power supply, and the star-connected first terminals are connected to the negative-side terminals of the DC power supply.
The current of the MMC converter can be divided into AC current and through current. The through current can be further divided into DC current and circulating current. The AC current is divided into two flows from each phase terminal of an AC power supply that is non-grounded at the neutral point to the positive-side arms and the negative-side arms. The AC current does not flow to the DC power supply side. The DC current is divided into three flows from the negative-side terminal of the DC power supply to the negative-side arms of the respective phases, and flows through the positive-side arms of the respective phases to the positive-side terminal of the DC power supply. The DC current does not flow to the AC power supply side. The circulating current flows from the negative-side arm, passes through one of the positive-side arms, is divided into two flows to the other two phase positive-side arms, and then flows through the negative-side arms. The circulating current does not flow to the AC power supply side or the DC power supply side, but circulates inside the MMC converter.
The circuit of the MMC converter having the above configuration has five current degrees of freedom. The degree of freedom of the AC current connected to the AC power supply that is non-grounded at the neutral point or high-resistance grounded is two. The AC current can be decomposed into dq phases by three-phase to two-phase conversion (uvw/dq conversion). The degree of freedom of the through current is three. The through current can be decomposed into a circulating current corresponding to the $\alpha\beta$ phases and a DC current corresponding to the 0 phase by three-phase to three-phase conversion including the 0 phase (uvw/$\alpha\beta$0 conversion).
In a case where the DC sides of the two MMC converters are connected back-to-back to form the frequency converter, the DC currents of the two MMC converters are common, so that the degree of freedom of current is nine.
The MMC converter is classified as a semiconductor power converter using power semiconductor devices. Compared with other power devices mainly made of metal conductors such as iron or copper, power semiconductor devices are strictly restricted in overcurrent tolerance. It is necessary to suppress transient overcurrent by giving top priority to speed-up of current control.
Conventionally, a control device of a semiconductor power converter has a hierarchical structure that includes a current control function for adjusting an AC current and a DC current at a high speed (hereinafter, in the present invention, referred to as "converter current control") and a function for calculating an AC current command and a DC current command in accordance with an operation command from the outside (hereinafter, in the present invention, referred to as a "host control device") to adjust the AC current and the DC current in accordance with a command from a host control device. In order to prevent interference between the converter current control and the host control device, the characteristic frequency (cutoff frequency) of the host control device needs to be sufficiently lower than the characteristic frequency of the converter current control to delay the response.
A first characteristic of the control device for the MMC converter is that the circulating current needs to be adjusted in addition to the AC current and DC current that are conventionally adjusted. The characteristics of the MMC converter greatly depend on how to calculate the circulating current command value using which physical quantity.
A second characteristic of the control device for the MMC converter is that a function of adjusting the AC current, the DC current, and the circulating current described above and simultaneously keeping capacitor voltages of the $6 \times K$ capacitors provided in the unit converters within a predetermined range is needed.

This function is achieved by a function of maintaining the time average value of the capacitor voltages in balance among the K unit converters by mutually adjusting, in the same arm, the modulation rates of the K PWM converters provided for the respective unit converters (hereinafter, in the present invention, referred to as "inter-stage balance control"), a function of maintaining the balance of the instantaneous values of the average voltage of the $2 \times K$ capacitors included in a positive-side arm and a negative-side arm in each phase, between the phases (hereinafter, in the present invention, referred to as "inter-phase balance control"), and a function of maintaining the balance of the differential voltage instantaneous value between the average voltage of the K capacitors of the positive-side arm and the average voltage of the K capacitors of the negative-side arm (hereinafter, in the present invention, referred to as "positive/negative balance control").

Patent Literature 1 discloses a basic circuit configuration in which an inductive element such as a reactor is provided between a first terminal of a positive-side arm and an AC terminal and between a second terminal of a negative-side arm and an AC terminal in order to suppress a through current of an MMC converter.

Patent Literature 2 discloses a basic hierarchical configuration of a control system including a PWM modulator and converter current control provided for each unit converter of an MMC converter. In addition, a method of adding the circulating current command of the second harmonic to the current command of the fundamental wave is disclosed.

Patent Literature 3 discloses a method of achieving a variable speed generator-motor by connecting an AC side of one of two MMC converters having the DC sides connected back-to-back to an AC rotary electric machine. Also disclosed is a method of damper starting to start a synchronous machine with an MMC converter that disadvantageously cannot output DC current in principle.

Patent Literature 4 discloses a configuration and a functional block diagram of a host control device for two MMC converters, the DC sides of which are connected back-to-back.

Patent Literature 5 specifically and systematically discloses a control configuration suitable for maintaining the inter-phase balance and the positive/negative balance of the capacitor voltages of the unit converters included in an MMC converter.

Patent Literature 6 discloses a method of controlling the second harmonic of the circulating current of the MMC converter to suppress the maximum value of the capacitor voltages, and controlling the fourth harmonic to suppress the maximum value of the arm currents.

Citation List

Patent Literature

Patent Literature 1: Japanese Patent No. 5189105
Patent Literature 2: Japanese Patent No. 5197623
Patent Literature 3: Japanese Patent No. 6243083
Patent Literature 4: International Publication No. 2022/059211
Patent Literature 5: Japanese Patent No. 6618823
Patent Literature 6: Japanese Patent No. 5827924

Summary of Invention

Problem to be solved by the Invention

An MMC converter has a disadvantage in that the volume per output capacity is larger than that of a conventional three-level converter or the like. This is an problem particularly when an MMC converter is used for an application with severe installation area and volume restrictions, such as pumped-storage power plants which are often installed underground and offshore wind power plants.

A cause of an increase in size of an MMC converter is capacitors used as energy storage elements. In a conventional MMC converter, capacitors often occupy more than half of the arm volume. Although the capacitors can be downsized by reducing the stored energy of the capacitors, an increase in voltage pulsation due to charging and discharging at a cycle determined by the AC frequency is a bottleneck.

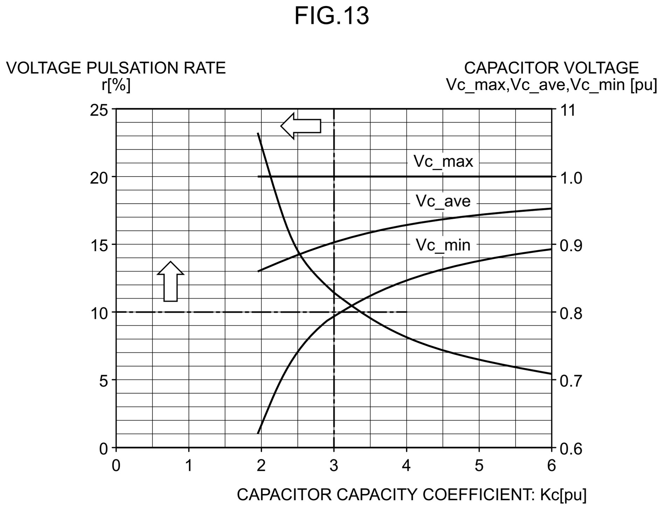

FIG. 13 illustrates a relationship between the capacitor capacity and the voltage pulsation. The capacitor capacity coefficient $K_c$ on the horizontal axis is a dimensionless number and a value obtained by dividing the energy when all the capacitors are charged at the rated voltage by the rated active power output of the MMC converter to obtain the time constant [sec] and then by unitizing the time constant into one cycle of the AC frequency. The frequency of the AC system is represented by F0, the rated output (active power) of the MMC converter is represented by P0, and the six arms included in the MMC converter each include K unit converters connected in series.

Here, when the capacitor capacity of the unit converter is represented by C and the rated voltage of the capacitor is represented by V0, $K_c$ is expressed by Formula (1).

Formula 1:

$$K_C = \frac{6 \times K \times \left(\frac{1}{2}C \cdot V0^2\right)}{P0} \times F0 \quad \cdots (1)$$

In FIG. 13, the vertical axis represents the voltage pulsation rate r, and the maximum value Vc_max, the average value Vc_ave, and the minimum value Vc_min of the capacitor voltage.

Here, the voltage pulsation rate r is a unitized dimensionless number and defined as follows.

$$r = (Vc\_max - Vc\_min)/(Vc\_max + Vc\_min) \times 100\%$$

The voltages Vc_max, Vc_ave, and Vc_min indicate values unitized by the capacitor rated voltage V0.

When an MMC converter is designed, the maximum voltage value Vc_max is adjusted to be the capacitor rated voltage V0 in order to maximize the voltage utilization of the capacitor. FIG. 13 illustrates changes in the voltage pulsation rate r, and the average value Vc_ave and the minimum value Vc_min of the capacitor voltage after adjustment.

FIG. 13 illustrates a case where the frequency F0 of the AC system is 60 Hz and the MMC converter has a power factor of 0.85, which is relatively high. In general, the values of the vertical axis are higher as the power factor is lower. However, the variation tendencies of the voltage pulsation rate r, and the average value Vc_ave and the minimum value Vc_min of the capacitor voltage with respect to the capacitor capacity coefficient $K_c$ do not change.

If no consideration is given to an increase in size of the device and the capacitor capacity is increased to suppress the voltage pulsation rate r to about 5 to 8%, the control of the MMC converter becomes remarkably easy. However, since the device volume increases substantially in proportion to the capacitor capacity coefficient $K_c$ on the horizontal axis in FIG. 13, the device volume becomes so large that it cannot be compared with the conventional three-level converter.

On the other hand, when the capacitor capacity is lowered, the DC rated voltage of the MMC converter is lowered in proportion to the capacitor average voltage Vc_ave, and it is thus necessary to increase the DC rated current in inverse proportion. This leads to an increase in the current capacity of the self-arc-extinguishing element and the anti-parallel diode included in a unit converter. In addition, when the capacitor capacity is lowered, the balance of the capacitor voltages of the K unit converters included in the arm is easily disturbed, and the operation cannot be continued due to disturbance such as AC voltage power supply variation due to system fault propagation. As described above, the capacitor capacity has a lower limit.

When comparing the size and the volume of the MMC converter with those of the conventional three-level converter, it is necessary to allow the capacitor voltage pulsation rate r of the MMC converter to be 10% or more in order to bring the size and the volume of the MMC converter close to those of the conventional three-level converter even when an accessory facility such as a harmonic filter unnecessary for the MMC converter is considered in the comparison. Alternatively, the above-described capacitor capacity coefficient $K_c$ needs to be set to a value smaller than 3.

In particular, in a case where one of two MMC converters having the DC sides connected back-to-back is connected to the AC rotary electric machine and the MMC converters are applied to a pumped-storage generator-motor or a wind power generator, these facilities are often located at the trailing end of the power system. It is not always appropriate to use the configuration of the MMC converter based on the implicit premise of being directly connected to the loop power supply network included in the bulk power system, for such facilities.

In the case of the trailing end connection to the power system, disturbance such as ground fault propagation on the AC system side is large. In particular, after the asymmetric fault in a case of one-circuit power transmission, during the period from the ground fault phase removal to the reclosing, it is necessary to continue the operation in the open-phase state (two-phase operation). The above-described operation continuation function has been conventionally realized without any problem in a constant speed power generation facility using a synchronous machine. Since it is a function that has been required as a major premise of commercial power generation facilities, there are many cases where it is not explicitly described in a purchase specification at the time of introduction of a semiconductor power conversion device to power generation facility. Introduction of a facility that does not even have a function that is considered to be common in conventional power generation facilities rather causes the stability of the entire power system to be impaired.

In a case where an MMC converter is used, and further, in a case where the capacitor capacity is suppressed to reduce the size and weight, the balance of the capacitor voltages is easily disturbed in the event of system fault propagation, so that it is difficult to achieve a function of continuing the operation while maintaining the balance of the capacitor voltages of the positive-side arms and the capacitor voltages of the negative-side arms of the MMC converter particularly in the event of an asymmetric fault.

The present invention is suitable for resolving the problem upon system fault propagation or the like while reducing the size and weight of the MMC converters by adjustment to fall within the range indicated by the arrows in FIG. 13. Specifically, the range is, for example, "the capacitor capacity coefficient $K_c$ is 3 or less" or "the capacitor voltage pulsation rate r is 10%% or more".

An object of the present invention is to resolve the above-described problem and achieve both low loss, which is an advantage of an MMC converter, and downsizing of the device and improvement of operation continuation performance in the event of asymmetric fault, which is a disadvantage of an MMC converter.

Means to Solve the Problem

In order to resolve the above-described problems and achieve the object, there is provided an MMC converter suitable for continuing the operation in the event of system fault propagation by rapidly suppressing imbalance of capacitor voltages between positive-side arms and negative-side arms in the event of an asymmetric fault by, as a positive/negative balance control method, generating circulating current command values of a second harmonic proportional to a result of multiplication of a positive sequence voltage phase of the AC voltage with a differential voltage between two average voltages of the average voltage of the capacitors of the unit converters of the positive arms and the average voltage of the capacitors of the unit converters of the negative-side arms included in the MMC converter, performing three-phase to two-phase conversion on the circulating current command values and on the circulating current feedback values with a phase that is twice the positive sequence voltage phase, comparing the two-phase circulating current command values and the two-phase circulating current feedback values, and performing proportional-integral control to settle the circulating current feedback values to the circulating current command values.

Hereinafter, means for implementing these functions will be described.

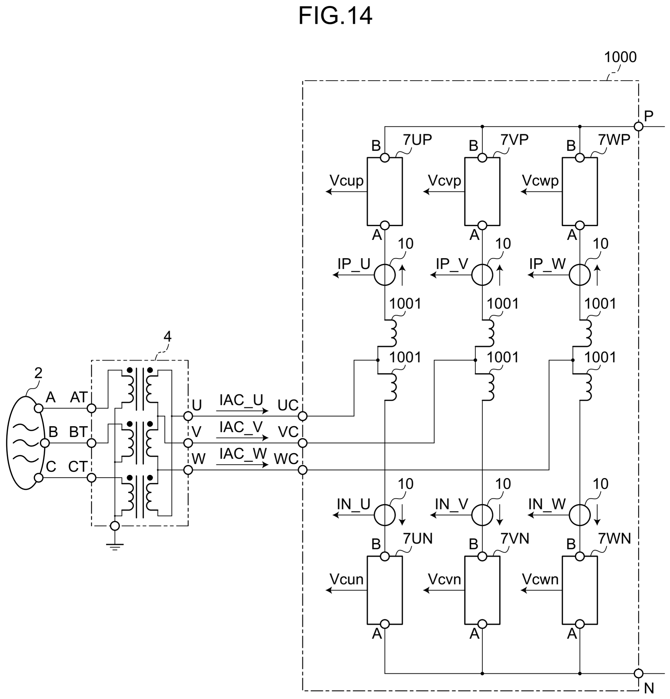

A configuration of an MMC converter 1000 is illustrated in FIG. 14. This drawing illustrates an example in which the MMC converter 1000 is connected, as an AC side power supply, to an AC system 2 via a unit transformer 4.

Between AC terminals (UC, VC, and WC) of the respective phases, first terminals (A) of positive-side arms (7UP, 7VP, and 7WP), and second terminals (B) of negative-side arms (7UN, 7VN, and 7WN), reactors 1001 are provided. Each of the positive-side arms 7P (7UP, 7VP, and 7WP) and the negative-side arms 7N (7UN, 7VN, and 7WN) is formed by connecting K (K is a natural number) half-bridge circuits, each serving as a unit converter, in series.

A current transformer 10 is provided between the first terminal (A) of each of the positive-side arms 7UP, 7VP, and 7WP and a corresponding one of the reactors 1001. The current transformer 10 is also provided between the second terminal (B) of each of the negative-side arms 7UN, 7VN, 7WN and a corresponding one of the reactors 1001. The six current transformers 10 measure the arm currents (IP_U, IP_V, IP_W, IN_U, IN_V, and IN_W).

Hereinafter, a configuration of a converter current control device of FIG. 15 will be described based on Patent Literature 5 as a conventional technique for realizing voltage balance control for capacitors.

The converter current control device is divided into three control calculation units: an AC current control calculation unit 1002, a DC current control calculation unit 1003, and a capacitor balance control calculation unit 1004.

The AC current control calculation unit 1002 calculates an AC voltage command (Vacu, Vacv, Vacw) by comparing an AC current command (IP_ref, IQ_ref) after three-phase to two-phase conversion with an AC current (Iα, Iβ) and performing AC current control (ACACR). The components of the AC current command (IP_ref, IQ_ref) are outputs from the capacitor voltage adjustment unit (AVcR) and the system voltage control (AVR), respectively. Patent Literature 5 does not disclose a method of adjusting (IQ_ref), but the system voltage control (AVR) is assumed because the use of the invention is a power generation facility.

The DC current control calculation unit 1003 calculates a DC voltage command (Vdc) from a DC current command (Idc_ref), a DC current correction command (Ic0_ref), a DC current (Idc), and a DC voltage command (Vdc_ref).

The capacitor balance control calculation unit 1004 is divided into three controls: inter-phase balance control, positive/negative balance control, and circulating current control, and has a hierarchical structure. The command value for the inter-phase balance control and the positive/negative balance control is always 0, and the inter-phase balance control and the positive/negative balance control serve as a host system that gives a command to the circulating current control. Therefore, in the positive/negative balance control, it is necessary to keep the characteristic frequency low so as not to interfere with the circulating current control.

The inter-phase balance control is an operation of maintaining the phase average voltages (Vcu, Vcv, and Vcw) of the respective U, V, and W phases in balance by performing proportional-integral control by proportional-integral controllers 1011 so that the phase average voltages (Vcu, Vcv, and Vcw) of the respective U, V, and W phases settle to the all capacitor average voltage (Vc) of the six arms 7 (7UP, 7VP, 7WP, 7UN, 7VN, and 7WN).

Moreover, the inter-phase balance control includes an output limiter 1005 for the all capacitor average voltage (Vc). According to Patent Literature 5, the maximum limit value is set to, for example, 110% of the rated voltage value of the all capacitor average voltage (Vc), and the minimum limit value is set to 90% of the rated voltage value of the all capacitor average voltage (Vc). When it is detected that the all capacitor average voltage (Vc) reaches the maximum limit value or the minimum limit value of the output limiter 1005 due to a system fault or the like, a DC limit calculation unit 1006 operates such that the output value from the DC current control calculation unit 1003 is limited.

In the positive/negative balance control, the proportional-integral controllers 1012 perform proportional-integral control calculation so as to maintain the balance between the arm average voltages (Vcup, Vcvp, and Vcwp) of the positive-side arms 7P and the arm average voltages (Vcun, Vcvn, and Vcwn) of the negative-side arms 7N of the respective U, V, and W phases.

The output of the inter-phase balance control and the output of the positive/negative balance control are added together by an adder 1007 for each phase to calculate circulating current command values (Icu_ref, Icv_ref, and Icw_ref).

The circulating current command values are coordinate-converted by an αβ0-axis coordinate converter 1008 into a circulating current command (Icα_ref, Icβ_ref) and a DC current correction command (Ic0_ref). The relationship is expressed by Formula (2).

Formula 2:

$$\begin{bmatrix} Ic\alpha\_ref \\ Ic\beta\_ref \\ Ic0\_ref \end{bmatrix} = \frac{2}{3} \begin{bmatrix} 1 & -\dfrac{1}{2} & -\dfrac{1}{2} \\ 0 & -\dfrac{\sqrt{3}}{2} & \dfrac{\sqrt{3}}{2} \\ \dfrac{1}{2} & \dfrac{1}{2} & \dfrac{1}{2} \end{bmatrix} \begin{bmatrix} Icu\_ref \\ Icv\_ref \\ Icw\_ref \end{bmatrix} \qquad \cdots (2)$$

According to Patent Literature 5, the DC current correction command (Ic0_ref) is a correction command value for the DC current command (Idc_ref) which is an input of the DC current control calculation unit 1003, and when the all capacitor average voltage (Vc) deviates from the command value due to a system fault or the like, the operation state of the MMC converter is maintained by correcting the DC current command (Idc_ref) with the correction command value (Ic0_ref).

In the circulating current control, the circulating current command (Icα_ref, Icβ_ref) and circulating currents (Icα and Icβ) are compared to output a balanced voltage correction command (Vbα, Vbβ) for maintaining the capacitor voltages in balance. The balanced voltage correction command is converted from the two-phase command values (Vbα and Vbβ) to three-phase command values (Vbu, Vbv, and Vbw) by an αβ-axis coordinate inverse converter 1009. The relationship between the two-phase command values (Vbα and Vbβ) and the three-phase command values (Vbu, Vbv, and Vbw) is expressed by Formula (3).

Formula 3:

$$\begin{bmatrix} Vbu \\ Vbv \\ Vbw \end{bmatrix} = \begin{bmatrix} 1 & 0 \\ -\dfrac{1}{2} & -\dfrac{\sqrt{3}}{2} \\ -\dfrac{1}{2} & \dfrac{1}{2} \end{bmatrix} \begin{bmatrix} Vb\alpha \\ Vb\beta \end{bmatrix} \qquad \cdots (3)$$

The AC voltage command (Vacu, Vacv, Vacw), the DC voltage command (Vdc), and the balanced voltage correction command (Vbu, Vbv, Vbw) are added together by adders 1010 to calculate a converter voltage command (Vu, Vv, Vw).

According to Patent Literature 5, even when a system fault occurs, the operation can be stably continued due to the configuration of the converter current control device described above.

On the other hand, an object of the present invention is to reduce the capacitor capacity of unit converters and the present invention is directed to an MMC converter having the voltage pulsation rate r exceeding 10%. At the same time, an object of the present invention is to achieve a control method that can stably continue operation even against disturbance on the AC system side in the event of system fault propagation or the like.

Hereinafter, a case where the capacitor capacity is reduced ($K_c$ = 2.7) for downsizing of the device and the capacitor voltage pulsation rate is set to r = 10% will be described. In this case, unless the integral gain of the proportional-integral controller 1012 included in the positive/negative balance control is set extremely low, a slight disturbance can collapse the balance between the capacitor voltages in the same arm. Hereinafter, the present invention will be described on the premise of proportional control calculation excluding integral gain as the positive/negative balance control.

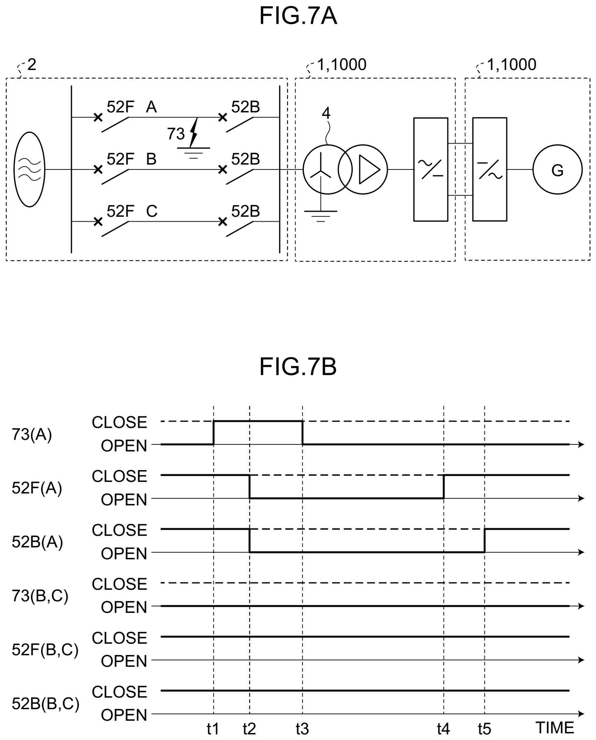

FIGS. 7A and 7B illustrate an operating condition when the MMC converter 1000 is connected to the trailing end of a one-circuit transmission line, a one-circuit ground fault that occurs most fluently occurs, and an asymmetric fault involving open-phase operation occurs in the AC system 2. FIG. 7A illustrates an example of a case where a ground fault occurs in an A-phase of the AC system 2. FIG. 7B is a time chart illustrating a control timing when the ground fault illustrated in FIG. 7A occurs.

Here, a case where the DC sides of the two MMC converters 1000 are connected back-to-back, one of the MMC converters is connected to the AC system 2 via the unit transformer 4, and the AC side of the other MMC converter is connected to an AC rotary electric machine instead of the unit transformers 4 to form a variable speed generator-motor is formed will be described.

The time chart in FIG. 7B will be described. At time t1, a ground fault occurs in the A-phase, and short-circuit occurs as denoted by 73. At time t2, a leading end breaker 52F (A) and a trailing end breaker 52B (A) provided for the A-phase are operated to open. At time t3, the arc is extinguished and the short circuit denoted by 73 is opened. At time t4, the leading end breaker 52F (A) is reclosed, and at time t5, the trailing end breaker 52B (A) is reclosed. During a period from time t2 to time t5, the MMC converter 1000 is operated in a two-phase energized state of the B phase and the C phase (A-phase open state).

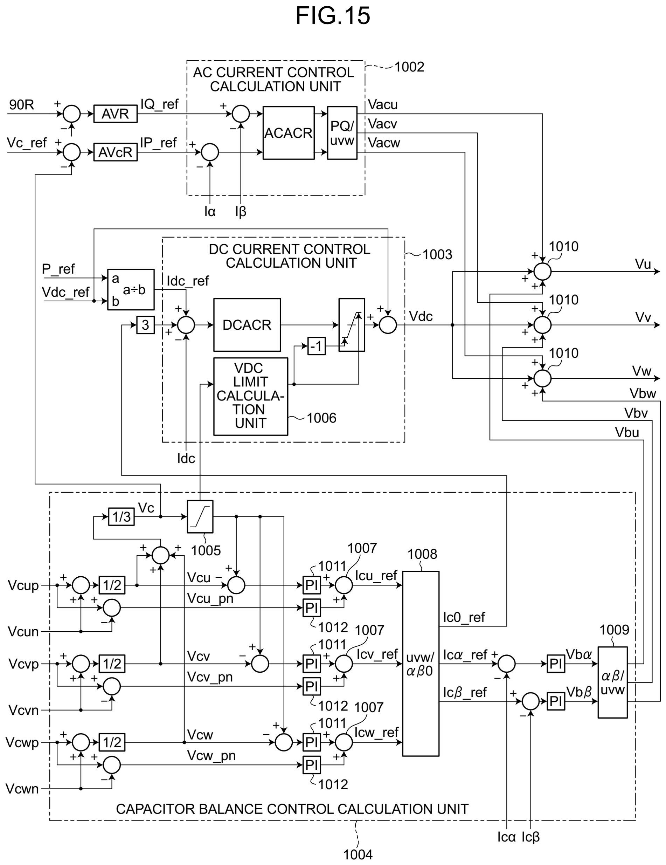

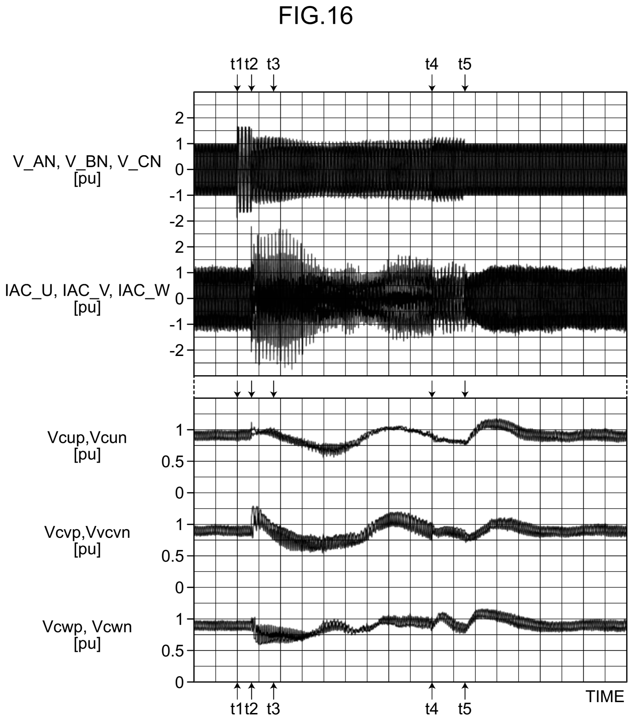

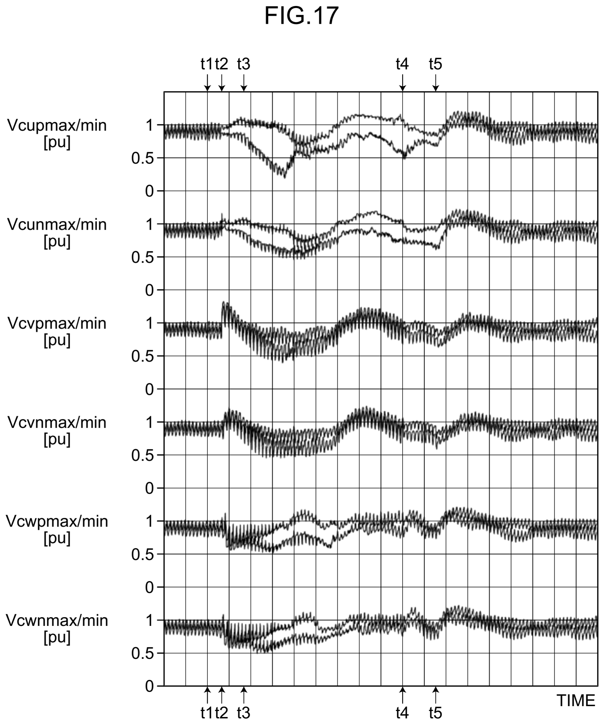

FIGS. 16 and 17 illustrate behaviors of the MMC converters having the configurations of FIGS. 14 and 15 at the time of AC system fault propagation described above with reference to FIGS. 7A and 7B. The behavior at the time of the system fault propagation varies depending on whether the operation is the power generation operation or the motor drive operation, and behaviors at the time of the power generation operation (P_ref > 0) are compared below.

The upper stage of FIG. 16 has two parts and the upper part illustrates a waveform obtained by unitizing three signals of phase voltages (V_AN, V_BN, and V_CN) on the first terminal (AT, BT, CT) side of the unit transformer 4 with the rated voltage of the unit transformer 4. The lower part is a waveform obtained by unitizing three signals of the AC currents (IAC_U, IAC_V, and IAC_W) on the second terminal (U, V, W) side of the unit transformer 4 with the rated value of the MMC converter 1000.

The lower stage of FIG. 16 has three parts, and the upper part is a waveform obtained by unitizing two signals of the arm average voltage (Vcup) of the U-phase positive-side arm 7UP and the arm average voltage (Vcun) of the negative-side arm 7UN of the MMC converter 1000 with the capacitor voltage rated value V0 of the MMC converter 1000. Similarly, the middle part illustrates the V phase and the lower part illustrates the W phase. Each of the arms 7 of the MMC converter 1000 includes six unit converters connected in series (K = 6), and the arm average voltage is an average voltage instantaneous value of the six capacitors.

From the arm average voltage waveforms illustrated in the lower stage of FIG. 16, it can be seen that the voltage balance between the arm average voltages (Vcup, Vcvp, and Vcwp) of the positive-side arms and the arm average voltages (Vcun, Vcvn, and Vcwn) of the negative-side arms is maintained even since time t2 when a leading end breaker 52F and a trailing end breaker 52B are opened to make the open-phase state (two-phase operation), and a phenomenon of imbalance does not appear and the arm average voltages are balanced even since time t5 when the trailing end breaker 52B is reclosed.

FIG. 17 illustrates instantaneous maximum values and instantaneous minimum values of the six capacitor voltages included in each arm. The first part indicates the instantaneous maximum value (Vcupmax) and the instantaneous minimum value (Vcupmin) of the capacitors of the U-phase positive-side arm 7UP of the MMC converter 1000. The above-described two signals are unitized with the rated voltage of the capacitors, and superimposed and illustrated on the same vertical axis coordinate. Similarly, the second part indicates the U-phase negative-side arm 7UN, and the lowermost part indicates the W-phase negative-side arm 7WN.

From the instantaneous maximum value (Vcupmax) and the instantaneous minimum value (Vcupmin) of the capacitor voltage illustrated in FIG. 17, it can be seen that the voltage balance between the six capacitor voltages of the capacitors included in the UP arm is maintained until time t1 before the occurrence of the fault. On the other hand, between time t2 and time t5 when the leading end breaker 52F and the trailing end breaker 52B are opened to be in the open-phase state, the maximum value and the minimum value are apart from each other and the voltages are not balanced. Even since time t5 at which the trailing end breaker 52B is reclosed, the state does not completely return to the voltage balance state at time t1 and operates in the voltage imbalance state.

The reason why the voltage imbalance is not resolved is that during and after a fault, an overmodulation operation state occurs in which the modulation rate of a part of the PWM modulators of the unit converters included in each arm is restricted by the maximum and minimum values, and the output correction for the inter-stage balance control does not work sufficiently. As described above, the converter voltage command (Vu, Vv, Vw) is a command obtained by adding together the control outputs of the AC voltage command (Vacu, Vacv, Vacw), the DC voltage command (Vdc), and the balanced voltage correction command (Vbu, Vbv, Vbw). The control output of the inter-stage balance control is added for each unit converter at the subsequent stage of the converter voltage command (Vu, Vv, Vw). When the converter voltage command (Vu, Vv, Vw) is in the overmodulation state, the output correction for the inter-stage balance control cannot be performed, and the capacitor voltages in the arm become imbalanced although the voltage balancing of the average voltages between the phases and between the positive and negative sides is maintained. In order to prevent such a state, it is necessary to shorten a period in which the output of the control system included in the converter voltage command (Vu, Vv, Vw) of each stage is restricted as much as possible. In addition, it has been found that it is necessary to appropriately arrange integral elements to configure such that a steady deviation is not allowed.

From the above results, it has been found that, with the conventional technique, when the capacitor capacity is reduced for the purpose of downsizing, it is difficult to quickly resolve the imbalance of the capacitor voltages of the MMC converter that occurs upon an asymmetric fault.

In the present invention, as a control method of the positive/negative balance control calculation unit, in order to quickly resolve an imbalance between the arm average voltages (Vcup, Vcvp, and Vcwp) of the positive-side arms 7P and the arm average voltages (Vcun, Vcvn, and Vcwn) of the negative-side arms 7N, the imbalance instantaneous values (Vcu_pn = Vcup - Vcun, Vcv_pn = Vcvp - Vcvn, Vcw_pn = Vcwp - Vcwn) are multiplied by a reference signal of an AC frequency to calculate circulating current command values of a double frequency, the circulating current command values and the circulating current feedback values are coordinate-converted with a frequency twice the AC frequency, the coordinate conversion results are compared, and proportional-integral control is performed. As a result, the integrators share the DC output in a steady state, and the purpose of the circulating current control is limited to the positive/negative balance control, whereby high-speed positive/negative balance control can be realized.

Therefore, as a method of calculating the reference signal of the AC frequency, circulating current command values (Icu_ref, Icv_ref, and Icw_ref) of a second harmonic wave proportional to a multiplication result of three signals of the positive/negative differential voltages (Vcu_pn, Vcv_pn, and Vcw_pn), the amplitude (|Iac_ref|) of the AC current command value, and the phase voltage reference signal of the positive sequence voltage phase ($\theta$v) calculated by the reference signal generator are generated, the circulating current command values (Icu_ref, Icv_ref, and Icw_ref) and the circulating current feedback values (Icu, Icv, and Icw) are subjected to three-phase to two-phase conversion with a phase twice the positive sequence voltage phase ($\theta$v) and are compared, proportional-integral control is performed so as to cause the circulating current feedback values (Icq_fB and Icd_fB) after the three-phase to two-phase conversion to settle at the circulating current command values (Icq_ref and Icd_ref), and the positive/negative balance voltage correction command (Vuab, Vvab, Vwab) is calculated by performing inverse conversion from two-phase to three-phase with a phase twice the positive sequence voltage phase ($\theta$v).

As another option, regarding the reference signal of the AC frequency, circulating current command values (Icu_ref, Icv_ref, and Icw_ref) of a second harmonic wave proportional to a multiplication result of three signals of the positive/negative differential voltages (Vcu_pn, Vcv_pn, and Vcw_pn), the amplitude (|Iac_ref|) of the AC current command value, and the phase voltage reference signal of the positive sequence voltage phase ($\theta$v) calculated by the reference signal generator are generated, the circulating current command values (Icu_ref, Icv_ref, and Icw_ref) and the circulating current feedback values (Icu, Icv, and Icw) are subjected to three-phase to two-phase conversion with a phase twice the positive sequence voltage phase ($\theta$v) and are compared, proportional-integral control is performed such that the circulating current feedback values (Icq_fB and Icd_fB) after the three-phase to two-phase conversion are settled at the circulating current command values (Icq_ref and Icd_ref), and the positive/negative balance voltage correction command (Vuab, Vvab, Vwab) is calculated by performing inverse conversion from two-phase to three-phase with a phase twice the positive sequence voltage phase ($\theta$v).

As still another option, regarding the reference signal of the AC frequency, an output polarity determination unit is provided that determines whether to output AC current command values (Iu_ref, Iv_ref, and Iw_ref) that are input as they are or inversely output the AC current command values according to the polarity of the converter output command (P_com), circulating current command values (Icu_ref, Icv_ref, and Icw_ref) of a second harmonic wave proportional a multiplication result of two signals of the positive/negative differential voltages (Vcu_pn, Vcv_pn, and Vcw_pn) between the average voltages of the capacitors of the positive-side arm 7P and the negative-side arms 7N of the respective phases and the calculation outputs (Iu_out, Iv_out, and Iw_out) of the output polarity determination unit are generated, the circulating current command values (Icu_ref, Icv_ref, and Icw_ref) and the circulating current feedback values (Icu, Icv, and Icw) are subjected to three-phase to two-phase conversion with a phase twice the positive sequence voltage phase ($\theta$v) and are compared, proportional-integral control is performed such that the circulating current feedback values (Icq_fB and Icd_fB) after the three-phase to two-phase conversion are settled at the circulating current command values (Icq_ref and Icd_ref), and the positive/negative balance voltage correction command (Vuab, Vvab, Vwab) is calculated by performing inverse conversion from two-phase to three-phase with a phase twice the positive sequence voltage phase ($\theta$v).

It has been found that the above-described configurations are suitable for resolving the problem.

With the above-described configurations, the circulating current command values of the second harmonic are generated, and the positive/negative balance voltage correction command for maintaining the balance between the average voltage of the capacitors of the positive-side arms and the average voltage of the capacitors of the negative-side arms is calculated by the proportional-integral control, so that the imbalance of the capacitor voltages upon the asymmetric fault is quickly resolved. Thus, the configurations have an effect of achieving operation continuation in the event of system

**EP 4 651 360 A1**

fault propagation.

Effects of the Invention

The MMC converter according to the present invention can achieve both reducing the size of the device and securing operation continuation performance in the event of system fault propagation.

Brief Description of Drawings

FIG. 1 is a diagram illustrating a circuit configuration of a first embodiment of an MMC converter according to the present invention.
FIG. 2 is a diagram illustrating a circuit configuration of arms (positive-side arms and negative-side arms).
FIG. 3 is a diagram illustrating a control block of a converter current control device of the first embodiment of the MMC converter according to the present invention.
FIG. 4 is a diagram illustrating a control block of a unit converter control device of the first embodiment of the MMC converter according to the present invention.
FIG. 5 is a diagram illustrating a control block of a balance control calculation unit of the first embodiment of the MMC converter according to the present invention.
FIG. 6 is a diagram illustrating a modification of the control block of the balance control calculation unit of the first embodiment of the MMC converter according to the present invention.
FIG. 7A is an explanatory diagram of a case where an asymmetric fault occurs in an AC system in a modular multilevel power conversion system of the present invention during operation.
FIG. 7B is a time chart of a case where an asymmetric fault occurs in an AC system in a modular multilevel power conversion system of the present invention during operation.
FIG. 8 is a diagram illustrating waveforms at the time of occurrence of an asymmetric fault in power generation operation when the converter current control device of the present invention is used.
FIG. 9 is a diagram illustrating waveforms at the time of occurrence of an asymmetric fault in power generation operation when the converter current control device of the present invention is used.
FIG. 10 is a diagram illustrating a control block of a balance control calculation unit of a second embodiment of the MMC converter according to the present invention.
FIG. 11 is a diagram illustrating a modification of the configuration of the MMC converter of the second embodiment of the MMC converter according to the present invention.
FIG. 12 is a diagram illustrating a modification of the converter current control device of the second embodiment of the MMC converter according to the present invention.
FIG. 13 is a diagram illustrating a relationship between the capacity of a capacitor included in a unit converter of the MMC converter, and the voltage pulsation rate, the maximum voltage value, the average voltage value, and the minimum voltage value of the capacitor.
FIG. 14 is a diagram illustrating a circuit configuration of a conventional MMC converter.
FIG. 15 is a diagram illustrating a converter control calculation block diagram of a conventional MMC converter.
FIG. 16 is a diagram illustrating waveforms at the time of occurrence of an asymmetric fault in power generation operation when the conventional converter current control device is used.
FIG. 17 is a diagram illustrating waveforms at the time of occurrence of an asymmetric fault in power generation operation when the conventional converter current control device is used.

Description of Embodiments

Hereinafter, embodiments of a MMC converter and a variable speed generator-motor according to the present invention will be described in detail with reference to the drawings. Note that the present invention is not limited by the embodiments.

[First Embodiment]

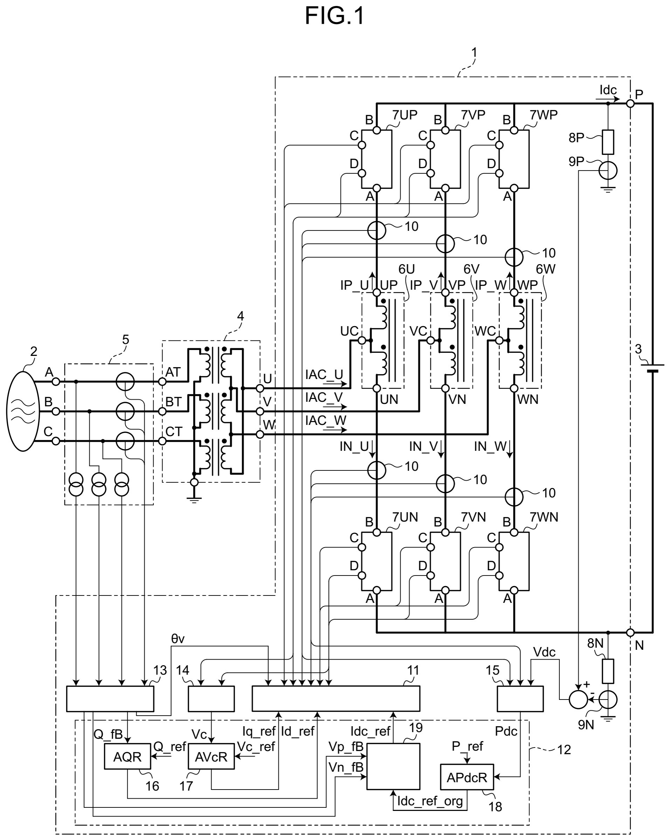

FIG. 1 is a diagram illustrating a circuit configuration of a first embodiment of an MMC converter according to the present invention.
An MMC converter 1 is connected to an AC system 2 via a unit transformer 4, and a signal transformer 5 including three voltage transformers and three current transformers is provided between first terminals (AT, BT, and CT) of the unit transformer 4 and the AC system 2. To DC side terminals (P and N) of the MMC converter 1, a DC power supply 3 is connected. The DC side terminals (P and N) of the MMC converter 1 are grounded through high resistors 8 (8P and 8N) and their potentials are fixed, and a DC voltage (Vdc) is differentially measured by current transformers 9 (9P and 9N).

Between AC terminals (U, V, and W) of the respective phases, first terminals (A) of positive-side arms (7UP, 7VP, and 7WP), and second terminals (B) of negative-side arms (7UN, 7VN, and 7WN), three-terminal reactors 6U, 6V, and 6W are provided. The AC terminals (U, V, and W) of the respective phases are connected to intermediate terminals (UC, VC, and WC) of the three-terminal reactors 6 (6U, 6V, and 6W), the first terminals (A) of the three positive-side arms 7UP, 7VP, and 7WP are connected to the positive-side terminals (UP, VP, and WP) of the three-terminal reactors 6, and the second terminals (B) of the three negative-side arms 7UN, 7VN, and 7WN are connected to the negative-side terminals (UN, VN, and WN) of the three-terminal reactors 6. Each arm of positive-side arms 7P and negative-side arms 7N is configured by connecting K half-bridge circuits, each serving as a unit converter, in series.

A current transformer 10 is provided between the first terminal (A) of each of the positive-side arms 7UP, 7VP, and 7WP and the corresponding positive-side terminal (UP, VP, and WP) of the three-terminal reactors 6. The current transformer 10 is also provided between the second terminal (B) of each of the negative-side arms 7UN, 7VN, and 7WN and the corresponding negative-side terminal (UN, VN, and WN) of the three-terminal reactors 6. The six current transformers 10 measure the arm currents (IP_U, IP_V, IP_W, IN_U, IN_V, and IN_W) and output the currents to a converter current control device 11.

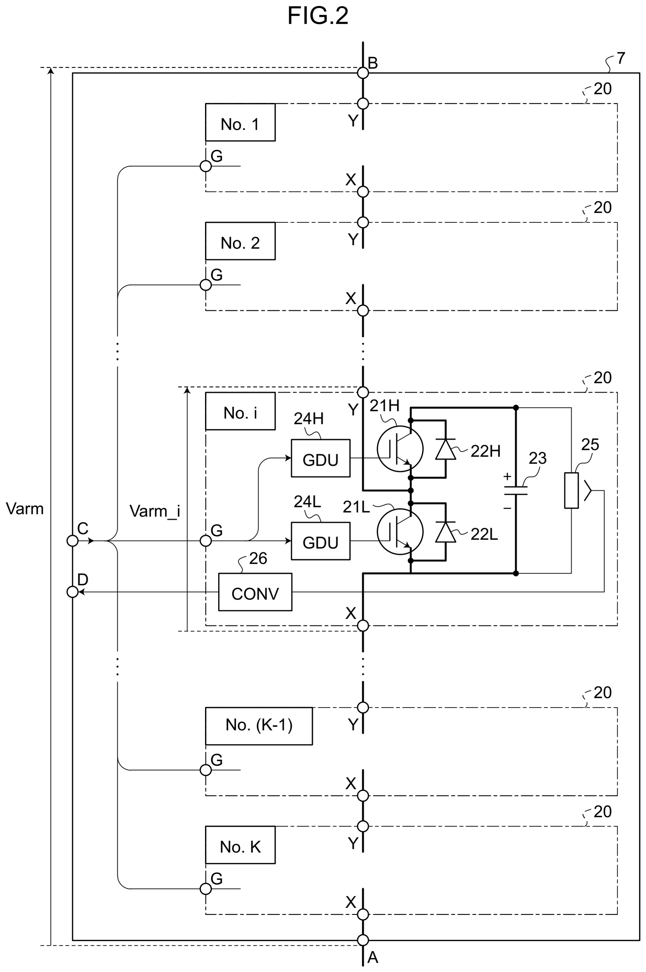

FIG. 2 is a diagram illustrating a circuit configuration of the arms 7 (the positive-side arms 7UP, 7VP, and 7WP and the negative-side arms 7UN, 7VN, and 7WN).

Each of the arms 7 has a configuration in which K half-bridge circuits 20, each serving as a unit converter, are connected in series between the first terminal A and the second terminal B. In FIG. 2, illustration of the circuit configuration except for the half-bridge circuit 20 of "No. i" is omitted.

The half-bridge circuit 20 includes two terminals of a positive-side terminal Y and a negative-side terminal X, and self-arc-extinguishing elements 21H and 21L and anti-parallel diodes 22H and 22L included in a bidirectional chopper circuit are connected to a capacitor 23.

PWM control is performed based on a command from the converter current control device 11 such that a target voltage is output between the XY terminals by an ignition/extinction command from gate drive units (GDU) 24H and 24L to the self-arc-extinguishing elements 21H and 21L.

A voltage detector 25 outputs the voltage of the capacitor 23 to a capacitor voltage detector 14 via a signal converter (CONV) 26.

The arm output voltage (Varm) between the first terminal A and the second terminal B of the arm 7 in FIG. 2 is a value obtained by adding together K unit output voltages (Varm_1 to varm_K) between the positive-side terminal Y and the negative-side terminal X of the half-bridge circuit 20.

Hereinafter, a configuration of the host control device 12 of the MMC converter 1 in FIG. 1 will be described based on Patent Literature 4.

An AC signal calculation unit 13 receives a voltage/current signal from the signal transformer 5, and calculates and outputs a reactive power (Q_fB) and a positive sequence voltage phase ($\theta$v). As the positive sequence voltage phase ($\theta$v), converted values according to the winding configuration of the unit transformer 4 and the phase sequence of the AC system 2 are output to the side of the second terminal (U, V, and W). In a case where the phase sequence of the AC system 2 is A → B → C, in the present embodiment, the phase is advanced by 30 degrees with respect to the detection phases at the first terminals (AT, BT, and CT) and the values are output.

A capacitor voltage detector 14 receives the capacitor voltages (vcup_1 to vcup_K, vcvp_1 to vcvp_K, vcwp_1 to vcwp_K, vcun_1 to vcun_K, vcvn_1 to vcvn_K, and vcwn_1 to vcwn_K) of all the (6 × K) unit converters of the positive-side arms 7P and the negative-side arms 7N, and calculates the all capacitor average voltage (Vc) of the six arms 7. K is the number of unit converters connected in series in the arm 7.

A DC power detector 15 calculates a DC power (Pdc) from the DC voltage (Vdc) and the arm currents (IP_U, IP_V, IP_W, IN_U, IN_V, and IN_W) by the following formulas.

$$\mathrm{Idc=(1/2)\times\{(IP\_U-IN\_U)+(IP\_V-IN\_V)+(IP\_W-IN\_W)\}}$$

$$\mathrm{Pdc=Vdc\times Idc}$$

A reactive power adjustment unit 16 compares the reactive power command (Q_ref) with the measurement value (Q_fB), and outputs the current command value (Id_ref) to the converter current control device 11.

A capacitor voltage adjustment unit 17 compares the capacitor voltage command (Vc_ref) with the all capacitor average voltage (Vc), and outputs the current command value (Iq_ref) to the converter current control device 11.

A DC power adjustment unit 18 compares the DC power command (P_ref) with the measurement value (Pdc), and outputs the current command value (Idc_ref_org) to a power command limiter 19.

The power command limiter 19 corrects the current command value (Id_ref_org) by limiting the DC current command (Idc_ref_org) according to the positive-phase voltage amplitude (Vp_fB) and the negative-phase voltage amplitude (Vn_fB) from the AC signal calculation unit 13, and outputs a corrected current command value (Idc_ref) to the converter current control device 11.

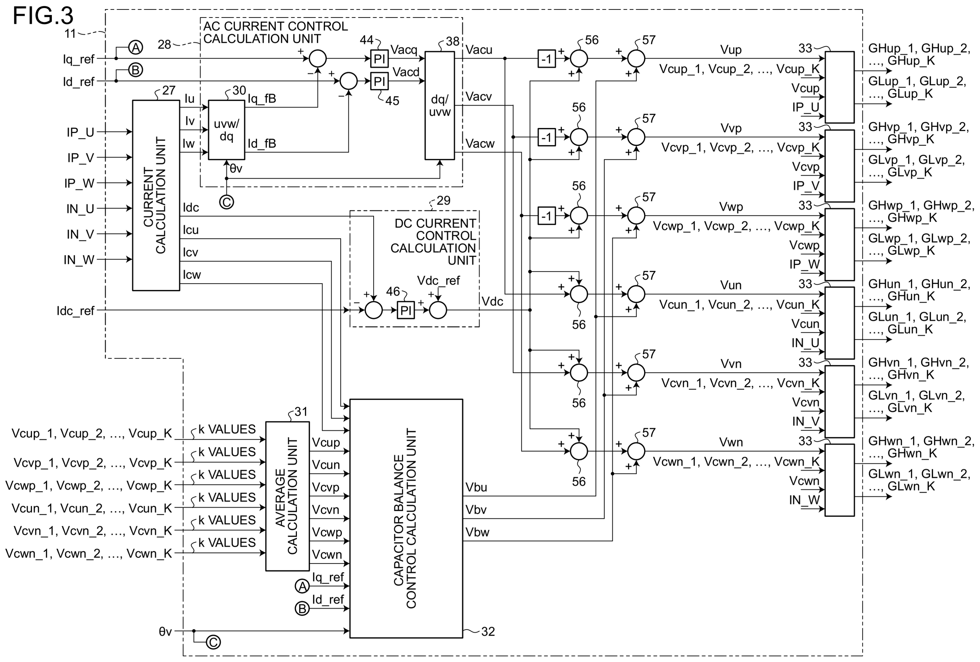

FIG. 3 is a diagram illustrating a control block of the converter current control device 11 of the first embodiment of the MMC converter according to the present invention.

The converter current control device 11 receives detection currents (IP_U, IP_V, IP_W, IN_U, IN_V, and IN_W) of the current transformers 10, and calculates AC currents (Iu, Iv, and Iw), a DC current (Idc), and circulating currents (Icu, Icv, and Icw) in a current calculation unit 27 by the following formulas.

$$Iu=IP\_U+IN\_U$$

$$Iv=IP\_V+IN\_V$$

$$Iw=IP\_W+IN\_W$$

$$Idc=(1/2)\times\{(IP\_U-IN\_U)+(IP\_V-IN\_V)+(IP\_W-IN\_W)\}$$

$$Icu=(1/2)\times(IP\_U-IN\_U)-(Idc/3)$$

$$Icv=(1/2)\times(IP\_V-IN\_V)-(Idc/3)$$

$$Icw=(1/2)\times(IP\_W-IN\_W)-(Idc/3)$$

An AC current control calculation unit 28 compares an AC current command (Iq_ref, Id_ref) with AC currents (Iq_fB and Id_fB) to calculate an AC voltage command (Vacq, Vacd). The AC currents (Iq_fB and Id_fB) are currents after three-phase to two-phase conversion of the AC currents (Iu, Iv, and Iw) by a dq-axis coordinate converter 30. The relationship is expressed by Formula (4).

Formula 4:

$$\begin{bmatrix} Iq\_fB \\ Id\_fB \end{bmatrix} = \frac{2}{3}\begin{bmatrix} cos(\theta v) & cos\left(\theta v - \frac{2}{3}\pi\right) & cos\left(\theta v + \frac{2}{3}\pi\right) \\ sin(\theta v) & sin\left(\theta v - \frac{2}{3}\pi\right) & sin\left(\theta v + \frac{2}{3}\pi\right) \end{bmatrix}\begin{bmatrix} Iu \\ Iv \\ Iw \end{bmatrix} \quad \cdots (4)$$

The AC voltage command (Vacq, Vacd) is converted by a dq-axis coordinate inverse converter 38 from the two-phase command values (Vacq and Vacd) to three-phase command values (Vacu, Vacv, and Vacw). The AC current control calculation unit 28 independently controls the first and second current degrees of freedom among the five current degrees of freedom of the MMC converter 1 on one side, at a high speed with a stationary deviation of 0. Specifically, two current control systems of a first proportional-integral controller 44 that controls an active current component (q-axis) subjected to dq-axis coordinate conversion with the positive sequence voltage phase (θv) of the fundamental wave and a second proportional-integral controller 45 that controls a reactive current component (d-axis) are configured.

A DC current control calculation unit 29 calculates a DC voltage command (Vdc) by adding an output obtained by comparing a DC current command (Idc_ref) and a DC current (Idc) to a voltage command (Vdc_ref). The DC current control calculation unit 29 controls, among the five current degrees of freedom of the MMC converter 1 on one side, the third current degree of freedom independently from the first and second current degrees of freedom at a high speed with a stationary deviation of 0. Specifically, a current control system of a third proportional-integral controller 46 that controls a DC current component is configured.

The AC voltage command (Vacu, Vacv, Vacw) and the DC voltage command (Vdc) are added together by adders 56. The AC voltage command (Vacu, Vacv, Vacw) includes voltage command values of AC voltage components of the arm output voltage (Varm) of FIG. 2. According to the configuration described in Patent Literature 6, the AC voltage command provided to the positive-side arms 7P is inverted and output, and the AC voltage command provided to the negative-side arms 7N is output as it is.

An average calculation unit 31 receives capacitor voltage instantaneous values (Vcup_1 to Vcup_K, Vcvp_1 to Vcvp_K, Vcwp_1 to Vcwp_K, Vcun_1 to Vcun_K, Vcvn_1 to Vcvn_K, and Vcwn_1 to Vcwn_K) of all the unit converters (6 ×K) of the positive-side arms 7P and the negative-side arms 7N, and calculates arm average voltages (Vcup, Vcvp, Vcwp, Vcun, Vcvn, and Vcwn) of the arms 7 by the following formulas.

$$Vcup=(Vcup\_1+Vcup\_2+...+Vcup\_K)/K$$

$$Vcvp=(Vcvp\_1+Vcvp\_2+...+Vcvp\_K)/K$$

$$Vcwp=(Vcwp\_1+Vcwp\_2+...+Vcwp\_K)/K$$

$$Vcun=(Vcun\_1+Vcun\_2+...+Vcun\_K)/K$$

$$Vcvn=(Vcvn\_1+Vcvn\_2+...+Vcvn\_K)/K$$

$$Vcwn=(Vcwn\_1+Vcwn\_2+...+Vcwn\_K)/K$$

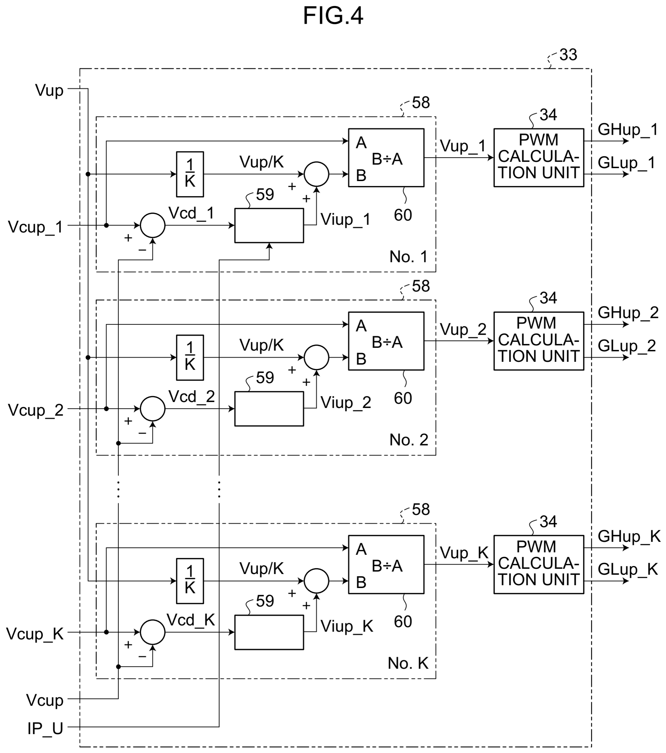

FIG. 4 is a diagram illustrating a control block of a unit converter control device 33 according to a configuration described in Patent Literature 5. The unit converter control device 33 includes inter-stage balance control calculation units 58 and PWM calculation units 34. Although FIG. 4 is described for the U-phase positive-side arm 7UP as an example, the same applies to the other arms.

The unit converter control device 33 includes K inter-stage balance control calculation units 58 and K PWM calculation units 34. Hereinafter, a method of calculating the unit converter voltage command (Vup_1) provided to the half-bridge circuit 20 of the first stage (No. 1) in FIG. 2 will be described as an example with the dead time necessary for the self-arc-extinguishing elements 21H and 21L omitted for simplification. The same applies to the unit converter voltage commands provided to the other half-bridge circuits 20.

The inter-stage balance control calculation unit 58 of FIG. 4 sets a differential voltage (Vcd_1) obtained by comparing the capacitor average voltage (Vcup) of the U-phase positive-side arm 7UP and the capacitor voltage instantaneous value (Vcup_1) as an input to an arm current polarity determination unit 59. The output from the arm current polarity determination unit 59 serves as an inter-stage balance correction command (Viup_1) of the inter-stage balance control.

The arm current polarity determination unit 59 outputs the differential voltage (Vcd_1) with its sign inverted when the arm current (IP_U) is positive (IP_U > 0), outputs the differential voltage (Vcd_1) as it is when the arm current is negative (IP_U < 0), and outputs 0 when the arm current is 0 (IP_U = 0).

The above-described inter-stage balance correction command (Viup_1) is added to a U-phase positive-side arm voltage command divided by the number K of half-bridge circuits (Vup/K). Further, the resultant output is divided by the capacitor voltage instantaneous value (Vcup_1) in the divider 60 to calculate the unit converter voltage command (Vup_1).

The PWM calculation unit 34 receives the voltage command Vup_1 from the inter-stage balance control calculation unit 58, compares the peak value with a carrier wave (not illustrated), and, when the voltage command Vup_1 is higher than the carrier wave, transmits a gate pulse GHup_1 to the gate drive unit 24H of FIG. 2 and outputs a firing pulse to the gate of the self-arc-extinguishing element 21H. When the voltage command Vup_1 is lower than the carrier wave, the PWM calculation unit 34 transmits a gate pulse GLup_1 to the gate drive unit 24L in FIG. 2 and outputs a firing pulse to the gate of the self-arc-extinguishing element 21L.

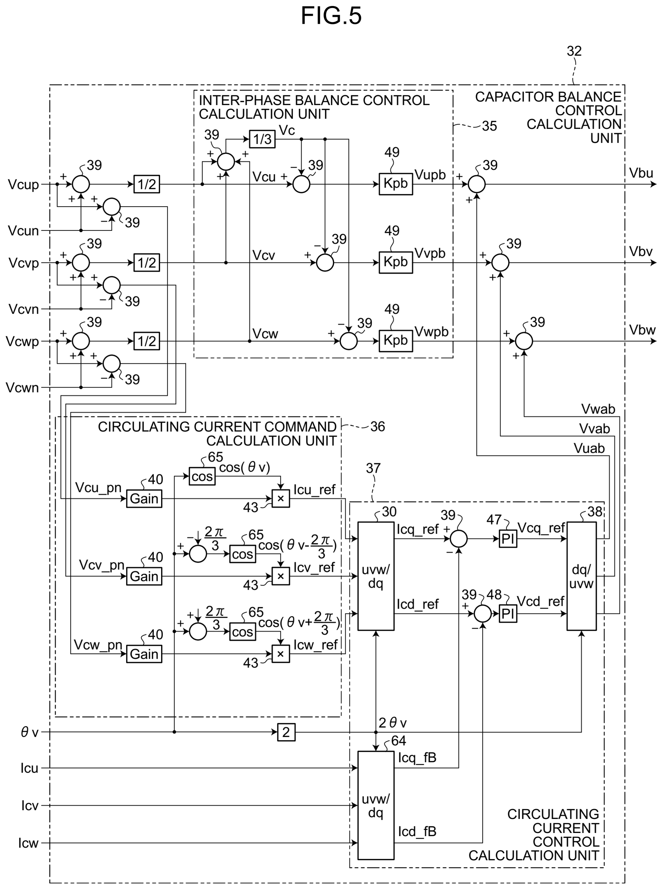

FIG. 5 is a diagram illustrating a control block of a capacitor balance control calculation unit 32 of the first embodiment of the MMC converter according to the present invention.

The capacitor balance control calculation unit 32 calculates the phase average voltages (Vcu, Vcv, and Vcw) and the all capacitor average voltage (Vc) from the arm average voltages (Vcup, Vcvp, Vcwp, Vcun, Vcvn, and Vcwn) of the arms 7 by the following formulas.

$$Vcu=(1/2)×(Vcup+Vcun)$$

$$Vcv=(1/2)\times(Vcvp+Vcvn)$$

$$Vcw=(1/2)\times(Vcwp+Vcwn)$$

$$Vc=(1/3)\times(Vcu+Vcv+Vcw)$$

The capacitor balance control calculation unit 32 is divided into three parts: an inter-phase balance control calculation unit 35, a circulating current command calculation unit 36, and a circulating current control calculation unit 37. The circulating current control in the present embodiment is used for positive/negative balance control for balancing the arm average voltages

(Vcup, Vcvp, and Vcwp) of the positive-side arms 7P and the arm average voltages (Vcun, Vcvn, and Vcwn) of the negative-side arms 7N.

The inter-phase balance control calculation unit 35 compares the all capacitor average voltage (Vc) with the phase average voltages of the U, V, and W phases (Vcu, Vcv, and Vcw), multiplies the results by proportional gains 49 (Kpb), and outputs an inter-phase balanced voltage correction command (Vupb, Vvpb, Vwpb). The inter-phase balance control calculation unit 35 of the present invention includes only the proportional gains 49 (Kpb) for preventing interference with the circulating current control calculation unit 37, and does not include an integral gain.

The positive/negative differential voltages (Vcu_pn, Vcv_pn, and Vcw_pn) between the arm average voltages (Vcup, Vcvp, and Vcwp) of the positive-side arms 7P and the arm average voltages (Vcun, Vcvn, and Vcwn) of the negative-side arms 7N of the respective U, V, and W phases are calculated by the following formulas.

$$Vcu\_pn=Vcup-Vcun$$

$$Vcv\_pn=Vcvp-Vcvn$$

$$Vcw\_pn=Vcwp-Vcwn$$

The circulating current command calculation unit 36 calculates circulating current command values (Icu_ref, Icv_ref, and Icw_ref) for maintaining the positive/negative differential voltages (Vcu_pn, Vcv_pn, and Vcw_pn) at zero to maintain the positive/negative balance.

Hereinafter, a method of calculating the circulating current command value will be described using the U phase as an example. For the U-phase circulating current command value (Icu_ref), a proportional gain 40 (Gain) is multiplied by a differential voltage (Vcu_pn) between the arm average voltage (Vcup) of the U-phase positive-side arm 7UP and the arm average voltage (Vcun) of the negative-side arm 7UN, and multiplied, by the multiplier 43, by a phase voltage reference signal (cosθv) of the positive sequence voltage phase (θv) calculated by a reference signal generator 65, so that the U-phase circulating current command value (Icu_ref) is calculated and output. The V-phase and W-phase circulating current command values (Icv_ref and Icw_ref) are similarly calculated and output. The relationships are expressed by the following formulas.

$$Icu\_ref=Gain\times Vcu\_pn\times\cos(\theta v)$$

$$Icv\_ref=Gain\times Vcv\_pn\times\cos\{\theta v-(2/3\times\pi)\}$$

$$Icw\_ref=Gain\times Vcw\_pn\times\cos\{\theta v+(2/3\times\pi)\}$$

Since the positive/negative differential voltages (Vcu_pn, Vcv_pn, and Vcw_pn) have a waveform including a fundamental wave component similarly to the positive sequence voltage phase (θv) of the AC voltage, the circulating current command values (Icu_ref, Icv_ref, and Icw_ref) obtained by multiplying the three signals include the second harmonic component. In the present embodiment, the circulating current of the second harmonic wave is coordinate-converted into a DC amount by the dq-axis coordinate converter, and the circulating current after the coordinate conversion is settled to the circulating current command values.

The circulating current control calculation unit 37 coordinate-converts the three-phase circulating current command values (Icu_ref, Icv_ref, and Icw_ref) into the two-phase circulating current command values (Icq_ref and Icd_ref) in the dq-axis coordinate converter 30. A dq-axis coordinate converter 64 coordinate-converts the three-phase circulating currents (Icu, Icv, and Icw) into two-phase circulating currents (Icq_fB and Icd_fB). The relationship between the three-phase circulating current command values (Icu_ref, Icv_ref, and Icw_ref), the two-phase circulating current command values (Icq_ref and Icd_ref), and the positive sequence voltage phase (θv) is expressed by Formula (5).
Formula 5:

$$\begin{bmatrix} Icq\_ref \\ Icd\_ref \end{bmatrix} = \frac{2}{3} \begin{bmatrix} cos(2\theta v) & cos\left(2\theta v - \frac{2}{3}\pi\right) & cos\left(2\theta v + \frac{2}{3}\pi\right) \\ sin(2\theta v) & sin\left(2\theta v - \frac{2}{3}\pi\right) & sin\left(2\theta v + \frac{2}{3}\pi\right) \end{bmatrix} \begin{bmatrix} Icu\_ref \\ Icv\_ref \\ Icw\_ref \end{bmatrix} \quad \cdots (5)$$

By comparing the circulating current command values (Icq_ref and Icd_ref) and the circulating currents (Icq_fB and Icd_fB), a positive/negative balance voltage correction command (Vcq_ref, Vcd_ref) is output. The circulating current control calculation unit 37 performs high-speed control of the fourth and fifth current degrees of freedom independently of the first to third current degrees of freedom, among the five current degrees of freedom of the MMC converter 1 on one side, with a stationary deviation of 0. Specifically, two current control systems of a fourth proportional-integral controller 47 that controls a circulating current component (q-axis) subjected to dq-axis coordinate conversion with a positive sequence voltage phase (2θv) that is twice the fundamental wave and a fifth proportional-integral controller 48 that controls the circulating current (q-axis) are configured.

The positive/negative balance voltage correction command (Vcq_ref, Vcd_ref) is converted from the two-phase command values (Vcq_ref and Vcd_ref) to the three-phase command values (Vuab, Vvab, and Vwab) by the dq-axis coordinate inverse converter 38. The relationship between the two-phase command values (Vcq_ref and Vcd_ref) and the three-phase command values (Vuab, Vvab, and Vwab) is expressed by Formula (6).
Formula 6:

$$\begin{bmatrix} Vuab \\ Vvab \\ Vwab \end{bmatrix} = \begin{bmatrix} cos(2\theta v) & sin(2\theta v) \\ cos\left(2\theta v - \frac{2}{3}\pi\right) & sin\left(2\theta v - \frac{2}{3}\pi\right) \\ cos\left(2\theta v + \frac{2}{3}\pi\right) & sin\left(2\theta v + \frac{2}{3}\pi\right) \end{bmatrix} \begin{bmatrix} Vcq\_ref \\ Vcd\_ref \end{bmatrix} \quad \cdots (6)$$

The inter-phase balanced voltage correction command (Vupb, Vvpb, Vwpb) and the positive/negative balance voltage correction command (Vuab, Vvab, Vwab) are added together by respective adders 39, and each adder 39 outputs the balanced voltage correction command (Vbu, Vbv, Vbw). The balanced voltage correction command (Vbu, Vbv, Vbw) can maintain balanced voltage of the capacitor voltages between phases and between positive side and negative sides.

Returning to the description of FIG. 3, the balanced voltage correction command (Vbu, Vbv, Vbw) of the present embodiment and the outputs from the adders 56 of FIG. 3 are added together by adders 57 to make an arm voltage command (Vup, Vvp, Vwp, Vun, Vvn, Vwn) of the arms 7.

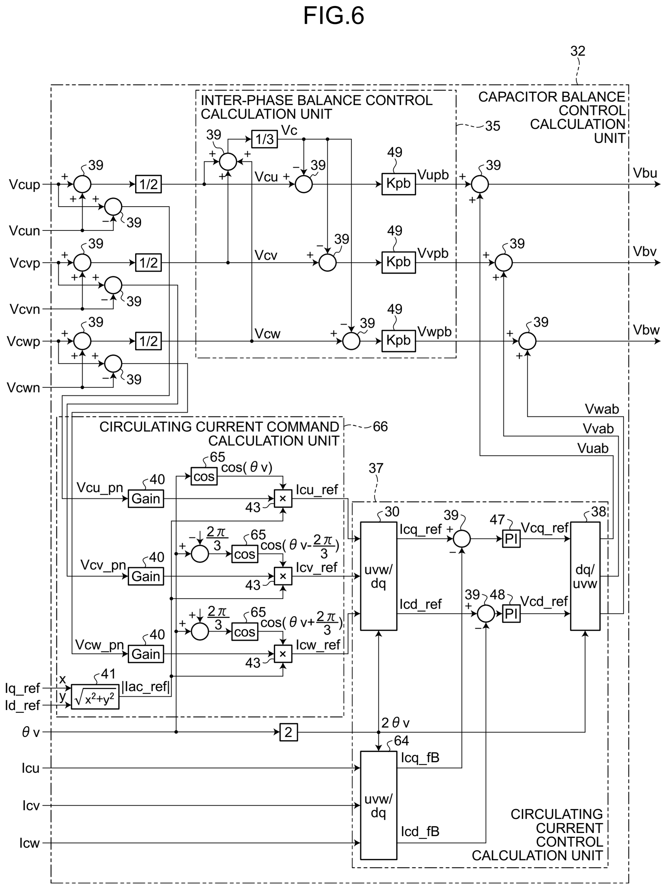

FIG. 6 is a diagram illustrating a modification of the control block of the capacitor balance control calculation unit 32 of the first embodiment of the MMC converter according to the present invention.

A circulating current command calculation unit 66 calculates circulating current command values (Icu_ref, Icv_ref, and Icw_ref) for maintaining the positive/negative differential voltages (Vcu_pn, Vcv_pn, and Vcw_pn) at 0 and maintaining the positive/negative balance.

Hereinafter, a method of calculating the circulating current command value will be described using the U phase as an example. For the circulating current command value (Icu_ref), a proportional gain 40 (Gain) is multiplied by a differential voltage (Vcu_pn) between the arm average voltage (Vcup) of the U-phase positive-side arm 7UP and the arm average voltage (Vcun) of the negative-side arm 7UN, and multiplied, by the multiplier 43, by an amplitude (|Iac_ref|) of the AC current command values (Id_ref and Iq_ref) calculated by the amplitude calculation unit 41 and a phase voltage reference signal (cosθv) of the positive sequence voltage phase (θv) calculated by a reference signal generator 65, so that the U-phase circulating current command value (Icu_ref) is calculated and output. The V-phase and W-phase circulating current command values (Icv_ref and Icw_ref) are similarly calculated and output. The relationships are expressed by the following formulas.

$$Icu\_ref = Gain \times Vcu\_pn \times |Iac\_ref| \times cos(\theta v)$$

$$Icv\_ref=Gain \times Vcv\_pn \times |Iac\_ref| \times cos\{\theta v-(2/3 \times \pi)\}$$

$$Icw\_ref=Gain \times Vcw\_pn \times |Iac\_ref| \times cos\{\theta v+(2/3 \times \pi)\}$$

Since the positive/negative differential voltages (Vcu_pn, Vcv_pn, and Vcw_pn) have a waveform including a fundamental wave component similarly to the positive sequence voltage phase (θv) of the AC voltage, the circulating current command values (Icu_ref, Icv_ref, and Icw_ref) obtained by multiplying the three signals include the second harmonic component. In the present embodiment, the circulating current of the second harmonic wave is coordinate-converted into a DC amount by the dq-axis coordinate converter, and the circulating current after the coordinate conversion is settled to the circulating current command values.

The proportional gain 40 (Gain) is a gain for conversion into circulating current command values (Icu_ref, Icv_ref, and Icw_ref). In the present embodiment, a set value of the proportional gain 40 (Gain) suitable for the positive/negative balance of the MMC converter having the capacitor voltage pulsation rate r = 10% or more is set to, for example, 0.4 or more and 0.6 or less. However, it is a set value when the amplitude (|Iac_ref|) is unitized by the rated current value.

In the configuration described above, for the current of five degrees of freedom (two AC currents, one DC current, two circulating currents) of the MMC converter 1 on one side is configured by five proportional-integral controls. As a result, the imbalance of the capacitor voltages in the event of an asymmetric fault is quickly resolved, and the operation is continued in the event of a system fault propagation.

FIG. 7A illustrates an operating condition when the MMC converter is connected to the trailing end of the one-circuit transmission line, a one-circuit ground fault that occurs most fluently occurs, and an asymmetric fault involving open-phase operation occurs in the AC system 2. The description of the time chart when an asymmetric fault occurs in the AC system of FIG. 7B will be omitted to avoid repetition.

The behavior upon system fault propagation varies depending on whether the operation is the power generation operation or the motor drive operation. Hereinafter, behaviors during the power generation operation (P_ref > 0) are compared.

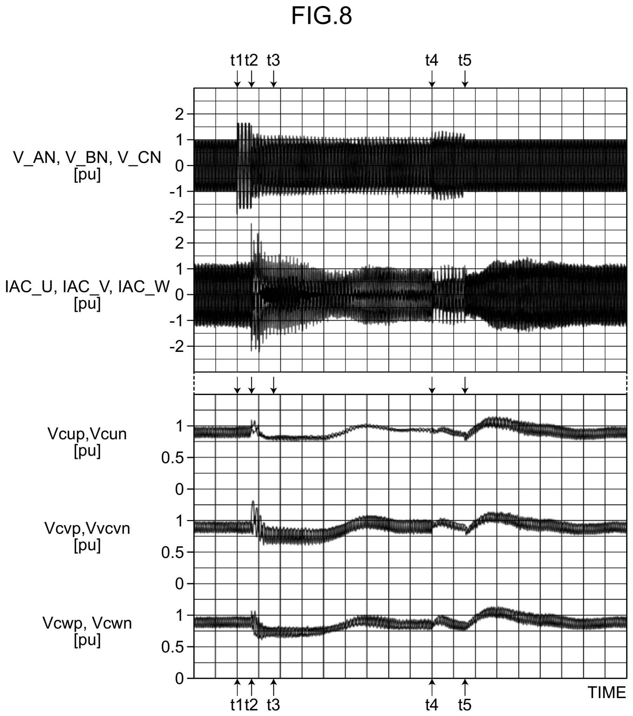

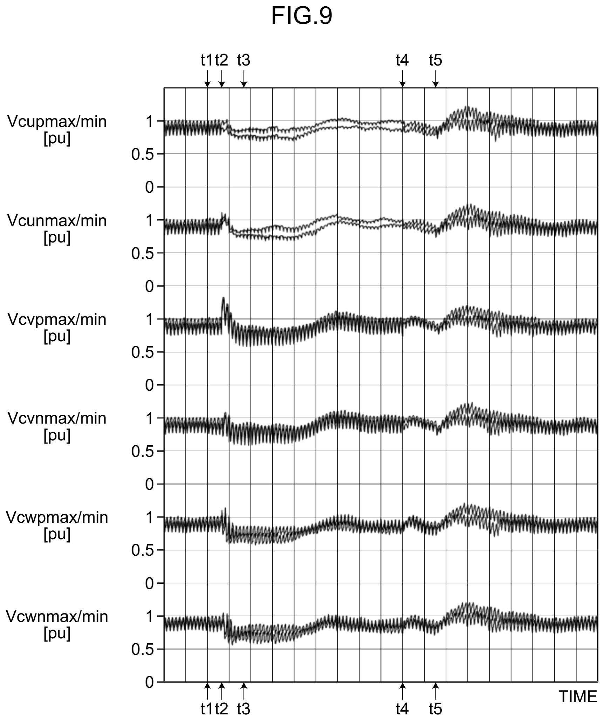

FIGS. 8 and 9 illustrate the behaviors of the configurations illustrated in FIGS. 1, 3, and 6 of the first embodiment of the present invention upon AC system fault propagation described above referring to FIG. 7.

In FIGS. 8 and 9, both the illustrated DC power (Pdc) and the illustrated reactive power (Q_fB) are those at the time of rated operation of the MMC converter 1 and the rated power factor is 0.95.

Since the waveforms displayed in FIGS. 8 and 9 and the display methods are the same as those in FIGS. 16 and 17 described above, the description thereof will be omitted to avoid duplication.

From the arm average voltage waveforms illustrated in the lower stage of FIG. 8, it can be seen that the voltage balance between the arm average voltages (Vcup, Vcvp, and Vcwp) of the positive-side arm and the arm average voltages (Vcun, Vcvn, and Vcwn) of the negative-side arm is maintained even since time t2 when a leading end breaker 52F and a trailing end breaker 52B are opened to make the open-phase state (two-phase operation), and a phenomenon of imbalance does not appear and the arm average voltages are balanced in all the arms even since time t5 when the trailing end breaker 52B is reclosed.

From the maximum value (Vcupmax) and the minimum value (Vcupmin) of the capacitor voltage illustrated in FIG. 9, it can be seen that the balance of the arm average voltage is maintained until time t1 before the occurrence of the fault, and the operation is performed without increasing the voltage imbalance even from time t2 to time t5 when the leading end breaker 52F and the trailing end breaker 52B are opened to make the open-phase state (two-phase operation). Even since time t5 at which the trailing end breaker 52B is reclosed, the state returns to the voltage balance state as at time t1 before the occurrence of the fault.

As described above, the effect of the configuration of the first embodiment of the MMC converter according to the present invention allows the MMC converter 1 to stably continue the operation even during the open-phase operation.

Furthermore, the configuration of the first embodiment has the following two effects.

Since the voltage balance can be maintained with about half the circulating current as compared with the conventional art, the generation loss in the MMC converter can be reduced. In addition, since voltage imbalance after a system fault can be improved as compared with the conventional art, the embodiment has an effect of preventing deterioration the capacitors.

[Second Embodiment]

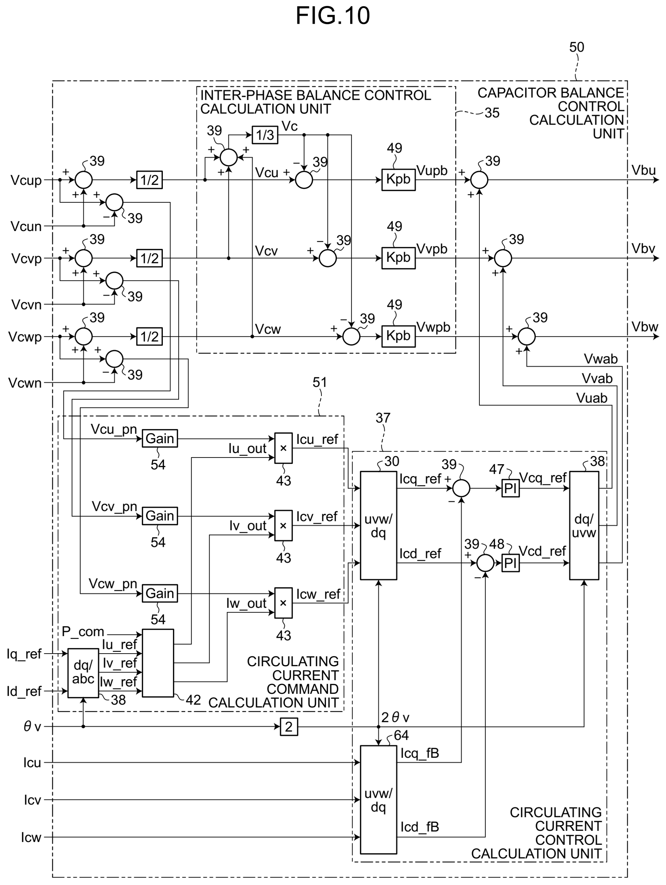

FIG. 10 is a diagram illustrating a capacitor balance control calculation unit 50 of a second embodiment of the MMC converter according to the present invention. In the second embodiment, the circuit configuration of the MMC converter and the control block diagram of the converter current control device are the same as those of the first embodiment in FIGS. 1 and 3, and thus, the description thereof will be omitted to avoid duplication. That is, the converter current control device included in the MMC converter 1 of the second embodiment has a configuration formed by replacing the capacitor balance control calculation unit 32 of the converter current control device 11 of first embodiment illustrated in FIG. 3 with the capacitor balance control calculation unit 50 illustrated in FIG. 10.

The capacitor balance control calculation unit 50 of the second embodiment is divided into three parts: an inter-phase balance control calculation unit 35, a circulating current command calculation unit 51, and a circulating current control calculation unit 37. Since the configurations of the inter-phase balance control calculation unit 35 and the circulating current control calculation unit 37 are the same as those of the first embodiment, the description thereof is omitted, and in the present embodiment, a method of calculating the circulating current command values (Icu_ref, Icv_ref, and Icw_ref) in the circulating current command calculation unit 51 will be described.

The AC current command (Iq_ref, Id_ref) is converted into three-phase current command values (Iu_ref, Iv_ref, and Iw_ref) by a dq-axis coordinate inverse converter 38.

The three-phase current command values (Iu_ref, Iv_ref, and Iw_ref) are input to an output polarity determination unit 42.

As expressed in Formula (7), the output polarity determination unit 42 outputs the input with its sign inverted when the converter output command (P_com) of the MMC converter 1 indicates the power generation operation (P_com > 0), and outputs the input as it is when it indicates the motor drive operation (P_ref ≤ 0).
Formula 7:

$$Iu\_out = \begin{cases} -Iu\_ref, & P\_com > 0 \\ Iu\_ref, & P\_com \le 0 \end{cases}$$

$$Iv\_out = \begin{cases} -Iv\_ref, & P\_com > 0 \\ Iv\_ref, & P\_com \le 0 \end{cases} \quad \cdots (7)$$

$$Iw\_out = \begin{cases} -Iw\_ref, & P\_com > 0 \\ Iw\_ref, & P\_com \le 0 \end{cases}$$

The circulating current command values (Icu_ref, Icv_ref, and Icw_ref) are obtained by multiplying the positive/negative differential voltages positive/negative differential voltages (Vcu_pn, Vcv_pn, and Vcw_pn) by a proportional gain 54 (Gain) and multiplying, by a multiplier 43, the calculation output (Iu_out, Iv_out, and Iw_out) from the output polarity determination unit 42. The circulating current command calculation unit 51 outputs the circulating current command values (Icu_ref, Icv_ref, and Icw_ref) value to the circulating current control calculation unit 37. The above relationship is expressed by the following formulas.

$$Icu\_ref = Gain \times Vcu\_pn \times Iu\_out$$

$$Icv\_ref = Gain \times Vcv\_pn \times Iv\_out$$

$$Icw\_ref = Gain \times Vcw\_pn \times Iw\_out$$

Since the positive/negative differential voltages (Vcu_pn, Vcv_pn, and Vcw_pn) have a waveform including a fundamental wave component similarly to the calculation outputs (Iu_out, Iv_out, Iw_out) from the output polarity determination unit 42, the circulating current command values (Icu_ref, Icv_ref, and Icw_ref) obtained by multiplying the two signals include the second harmonic component. In the present embodiment, the circulating current control calculation unit 37 is configured to coordinate-convert the circulating current of the second harmonic wave into a DC amount by the dq-axis coordinate converter 30 and settle the circulating current after the coordinate conversion to the circulating current command values.

The second embodiment has an effect that the voltage balance of the capacitor voltages can be maintained and the MMC converter can stably continue the operation even during the open-phase operation with a simpler configuration since the positive sequence voltage phase (θv) of the AC voltage used for the calculation of the circulating current command values of the first embodiment is unnecessary.

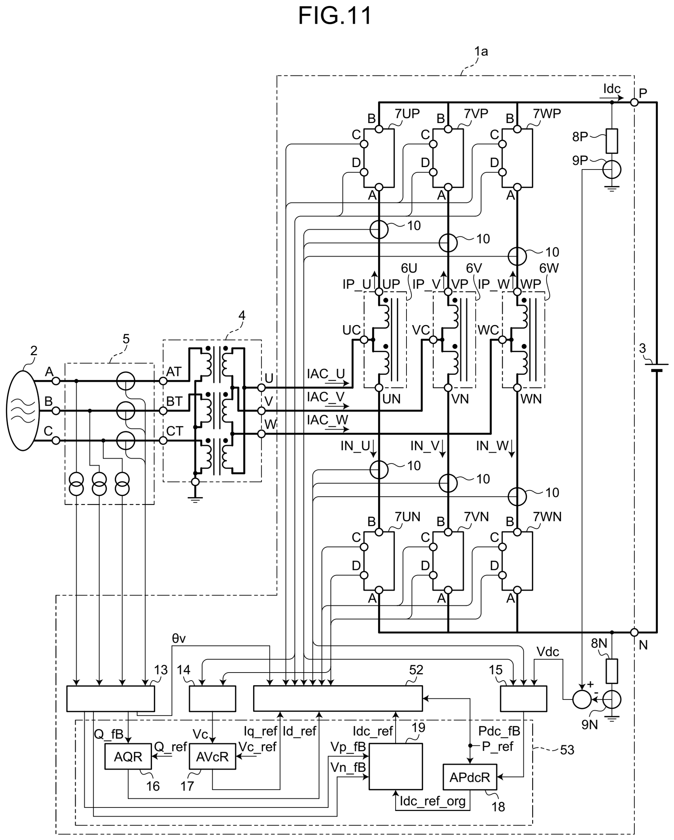

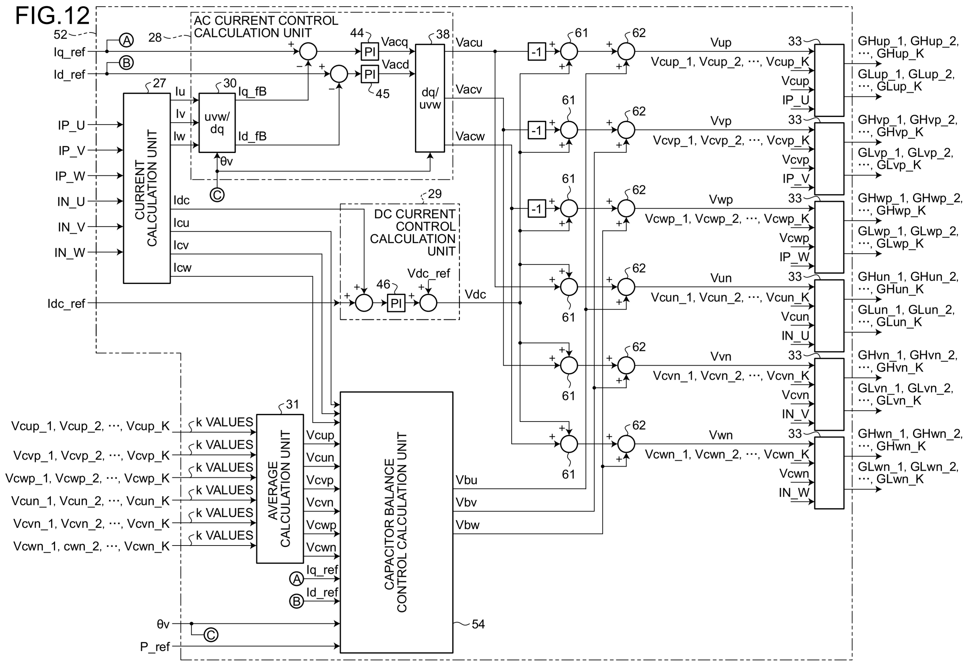

FIGS. 11 and 12 illustrate a modification of the second embodiment. Specifically, FIG. 11 illustrates a modification of the MMC converter 1 illustrated in FIG. 1, and FIG. 12 illustrates a modification of the converter current control device 11 included in the MMC converter 1 illustrated in FIG. 1. An MMC converter 1a of the modification illustrated in FIG. 11 has a configuration formed by replacing the host control device 12 and the converter current control device 11 of the MMC converter 1 with a host control device 53 and a converter current control device 52.

The host control device 53 included in the MMC converter 1a in FIG. 11 includes an interface for transmitting the DC power command (P_ref) to the converter current control device 52, and transmits the DC power command (P_ref) to the converter current control device 52.

The converter current control device 52 of the modification illustrated in FIG. 12 uses the DC power command (P_ref) from the host control device 53 as the output polarity determination unit of the capacitor balance control calculation 54 instead of the converter output command (P_com) of the MMC converter 1.

Note that FIGS. 11 and 12 illustrate the modification of the second embodiment, but the present invention can also be implemented by a combination of the converter current control device 52 and the host control device 53 including an interface for transmitting and receiving the DC power command (P_ref), and first embodiment.

Reference Signs List

| | |
|---|---|
| 1, 1a, 1000 | MMC converter |
| 2 | AC system |
| 3 | DC power supply |
| 4 | unit transformer |
| 5 | signal transformer |
| 6, 6U, 6V, 6W | three-terminal reactor |
| 7 | arm |
| 7P, 7UP, 7VP, 7WP | positive-side arm |
| 7N, 7UN, 7VN, 7WN | negative-side arm |
| 8, 8P, 8N | high resistor |
| 9, 9P, 9N, 10 | current transformer |
| 11, 52 | converter current control device |
| 12, 53 | host control device |
| 13 | AC signal calculation unit |
| 14 | capacitor voltage detector |
| 15 | DC power detector |
| 16 | reactive power adjustment unit |
| 17 | capacitor voltage adjustment unit |
| 18 | DC power adjustment unit |
| 19 | power command limiter |
| 20 | half-bridge circuit |
| 21H, 21L | self-arc-extinguishing element |
| 22H, 22L | anti-parallel diode |
| 23 | capacitor |
| 24H, 24L | gate drive unit |
| 25 | voltage detector |
| 26 | signal converter |
| 27 | current calculation unit |
| 28, 1002 | AC current control calculation unit |
| 29, 1003 | DC current control calculation unit |
| 30, 64 | dq-axis coordinate converter |
| 31 | average calculation unit |
| 32, 50, 54, 1004 | capacitor balance control calculation unit |
| 33 | inter-stage balance controller |
| 34 | PWM calculation unit |
| 35 | inter-phase balance control calculation unit |
| 36, 51, 66 | circulating current command calculation unit |
| 37 | circulating current control calculation unit |
| 38 | dq-axis coordinate inverse converter |
| 39, 56, 57, 1007, 1010 | adder |
| 40, 49, 55 | proportional gain |
| 41 | amplitude calculation unit |

| 42 | output polarity determination unit |
| 43 | multiplier |
| 44 | first proportional-integral controller |
| 45 | second proportional-integral controller |
| 46 | third proportional-integral controller |
| 47 | fourth proportional-integral controller |
| 48 | fifth proportional-integral controller |
| 58 | unit converter control device |
| 59 | arm current polarity determination unit |
| 60 | divider |
| 65 | reference signal generator |
| 1001 | reactor |
| 1005 | output limiter |
| 1006 | DC limit calculation unit |
| 1008 | $\alpha\beta0$-axis coordinate converter |
| 1009 | $\alpha\beta$-axis coordinate inverse converter |
| 1011, 1012 | proportional-integral controller |

**Claims**

1.  A modular multilevel power converter connected between a positive-side terminal (P) and a negative-side terminal (N) of a DC power supply and three-phase AC terminals (U, V, and W), comprising: three P-side arms (7UP, 7VP, and 7WP) connected to inductive elements (6) in series and provided between the positive-side terminal and the three-phase AC terminals, each of the P-side arms including a two-terminal arm that includes K two-terminal unit converters connected in series, the unit converters being capable of outputting arbitrary voltages via energy storage elements having a voltage source characteristic, where K is a natural number of 1 or more; three N-side arms (7UN, 7VN, and 7WN) connected to the inductive elements in series and provided between the negative-side terminal and the three-phase AC terminals, each of the N-side arms including a two-terminal arm that includes K two-terminal unit converters connected in series, the unit converters being capable of outputting arbitrary voltages via energy storage elements having a voltage source characteristic, where K is a natural number of 1 or more; six arm current transformers (10) that detect three currents (IP_U, IP_V, and IP_W) flowing from the three P-side arms on the positive-side terminal side to the positive-side terminal and three currents (IN_U, IN_V, and IN_W) flowing from the three N-side arms on the negative-side terminal side to the negative-side terminal; a current calculation unit (27) that receives signals from the arm current transformers, and calculates and outputs AC currents (Iu = IP_U + IN_U, Iv = IP_V + IN_V, Iw = IP_W + IN_W) flowing from the three-phase AC terminals to the modular multilevel power converter, circulating currents (ICU = 1/2(IP_U - IN_U), ICV = 1/2(IP_V - IN_V), and ICW = 1/2(IP_W - IN_W)) from the N-side arms to the P-side arms, and a DC current (Idc = ICU + ICV + ICW) flowing from the negative-side terminal to the positive-side terminal; an AC current control calculation unit (28) that performs a three-phase to two-phase conversion on the AC currents, performs a comparison calculation of comparing a result of the three-phase to two-phase conversion with two-phase current command values (Iq_ref and Id_ref), and performs a two-phase to three-phase inverse conversion on a result of the comparison calculation to output a first voltage command (Vacu, Vacv, Vacw); a DC current control calculation unit (29) that outputs, as a second voltage command (Vdc), a result of a comparison calculation of comparing the DC current value Idc with a DC current command value; and a converter current control device (11) that adds the second voltage command to the first voltage command by an adder (56) and outputs a result of the addition as a voltage command (Vup, Vvp, Vwp) to the three P-side arms and a voltage command (Vun, Vvn, Vwn) to the three N-side arms, wherein the converter current control device includes: an average calculation unit (31) that calculates average voltage values (Vcup, Vcvp, and Vcwp) of the K energy storage elements of the P-side arms and average voltage values (Vcun, Vcvn, and Vcwn) of the K energy storage elements of the N-side arms; a calculation unit (39) that calculates positive/negative differential voltages (Vcu_pn, Vcv_pn, and Vcw_pn) between the average voltages of the P-side arms and the N-side arms; a reference signal generator (65) that calculates a phase voltage reference signal for each phase from a positive sequence voltage phase ($\theta v$) of an AC system; a circulating current command calculation unit (36) that includes multipliers (43) provided for the respective phases, the multipliers each receiving two signals of the phase voltage reference signal and the positive/negative differential voltages, and sets outputs of the multipliers (43) as circulating current command values (Icu_ref, Icv_ref, and Icw_ref); a dq-axis coordinate converter (30) that performs three-phase to two-phase conversion on the circulating current command values with a phase ($2\theta v$) that is twice the positive sequence voltage phase to output two-phase circulating current command values (Icq_ref and Icd_ref); a dq-axis coordinate converter (64) that performs three-phase to two-phase conversion on the circulating currents with a phase that is twice the positive sequence voltage phase to output two-phase circulating current feedback values (Icq_fb and Icd_fb); and a circulating current control calculation unit (37) that compares the two-phase circulating current command values with two-phase circulating current feedback values, inputs a result of the comparison to control calculation units (47, 48) including an integral element to output a two-phase voltage command (Vcq_ref, Vcd_ref), inputs the two-phase voltage command into a dq-axis coordinate inverse converter (38), and outputs a third voltage command (Vbu, Vbv, Vbw) obtained by inversely converting, by the dq-axis coordinate inverse converter (38), the two-phase voltage command with a phase twice the positive sequence voltage phase as a reference, and the third voltage command is added to the first voltage command and the second voltage command by an adder (57) to output a result of the addition as the voltage command to the three P-side arms and the voltage command to the three N-side arms.

2. A modular multilevel power converter connected between a positive-side terminal (P) and a negative-side terminal (N) of a DC power supply and three-phase AC terminals (U, V, and W), comprising: three P-side arms (7UP, 7VP, and 7WP) connected to inductive elements (6) in series and provided between the positive-side terminal and the three-phase AC terminals, each of the P-side arms including a two-terminal arm that includes K two-terminal unit converters connected in series, the unit converters being capable of outputting arbitrary voltages via energy storage elements having a voltage source characteristic, where K is a natural number of 1 or more; three N-side arms (7UN, 7VN, and 7WN) connected to the inductive elements in series and provided between the negative-side terminal and the three-phase AC terminals, each of the N-side arms including a two-terminal arm that includes K two-terminal unit converters connected in series, the unit converters being capable of outputting arbitrary voltages via energy storage elements having a voltage source characteristic, where K is a natural number of 1 or more; six arm current transformers (10) that detect three currents (IP_U, IP_V, and IP_W) flowing from the three P-side arms on the positive-side terminal side to the positive-side terminal and three currents (IN_U, IN_V, and IN_W) flowing from the three N-side arms on the negative-side terminal side to the negative-side terminal; a current calculation unit (27) that receives signals from the arm current transformers, and calculates and outputs AC currents (Iu = IP_U + IN_U, Iv = IP_V + IN_V, Iw = IP_W + IN_W) flowing from the three-phase AC terminals to the modular multilevel power converter, circulating currents (ICU = 1/2(IP_U - IN_U), ICV = 1/2(IP_V - IN_V), and ICW = 1/2(IP_W - IN_W)) from the N-side arms to the P-side arms, and a DC current (Idc = ICU + ICV + ICW) flowing from the negative-side terminal to the positive-side terminal; an AC current control calculation unit (28) that performs a three-phase to two-phase conversion on the AC currents, performs a comparison calculation of comparing a result of the three-phase to two-phase conversion with two-phase current command values (Iq_ref and Id_ref), and performs a two-phase to three-phase inverse conversion on a result of the comparison calculation to output a first voltage command (Vacu, Vacv, Vacw); a DC current control calculation unit (29) that outputs, as a second voltage command (Vdc), a result of a comparison calculation of comparing the DC current value Idc with a DC current command value; and a converter current control device (11) that adds the second voltage command to the first voltage command by an adder (56) and outputs a result of the addition as a voltage command (Vup, Vvp, Vwp) to the three P-side arms and a voltage command (Vun, Vvn, Vwn) to the three N-side arms, wherein the converter current control device includes: an average calculation unit (31) that calculates average voltage values (Vcup, Vcvp, and Vcwp) of the K energy storage elements of the P-side arms and average voltage values (Vcun, Vcvn, and Vcwn) of the K energy storage elements of the N-side arms; a calculation unit (39) that calculates positive/negative differential voltages (Vcu_pn, Vcv_pn, and Vcw_pn) between the average voltages of the P-side arms and the N-side arms; a reference signal generator (65) that calculates a phase voltage reference signal for each phase from a positive sequence voltage phase ($\theta v$) of an AC system; an amplitude calculation unit (41) that calculates an amplitude (|Iac_ref|) of the two-phase current command values; a circulating current command calculation unit (66) that includes multipliers (43) provided for the respective phases, the multipliers each receiving three signals of the amplitude calculation output, the phase voltage reference signal, and the positive/negative differential voltages, and sets outputs of the multipliers (43) as circulating current command values (Icu_ref, Icv_ref, and Icw_ref); a dq-axis coordinate converter (30) that performs three-phase to two-phase conversion on the circulating current command values with a phase ($2\theta v$) that is twice the positive sequence voltage phase to output two-phase circulating current command values (Icq_ref and Icd_ref); a dq-axis coordinate converter (64) that performs three-phase to two-phase conversion on the circulating currents with a phase that is twice the positive sequence voltage phase to output two-phase circulating current feedback values (Icq_fb and Icd_fb); and a circulating current control calculation unit (37) that compares the two-phase circulating current command values with two-phase circulating current feedback values, inputs a result of the comparison to control calculation units (47, 48) including an integral element to output a two-phase voltage command (Vcq_ref, Vcd_ref), inputs the two-phase voltage command into a dq-axis coordinate inverse converter (38), and outputs a third voltage command (Vbu, Vbv, Vbw) obtained by inversely converting, by the dq-axis coordinate inverse converter (38), the two-phase voltage command with a phase twice the positive sequence voltage phase as a reference, and the third voltage command is added to the first voltage command and the second voltage command by an adder (57) to output a result of the addition as the voltage command to the three P-side arms and the voltage command to the three N-side arms.

3. A modular multilevel power converter connected between a positive-side terminal (P) and a negative-side terminal (N) of a DC power supply and three-phase AC terminals (U, V, and W), comprising: three P-side arms (7UP, 7VP, and 7WP) connected to inductive elements (6) in series and provided between the positive-side terminal and the three-phase AC terminals, each of the P-side arms including a two-terminal arm that includes K two-terminal unit converters connected in series, the unit converters being capable of outputting arbitrary voltages via energy storage elements having a voltage source characteristic, where K is a natural number of 1 or more; three N-side arms (7UN, 7VN, and 7WN) connected to the inductive elements in series and provided between the negative-side terminal and the three-phase AC terminals, each of the N-side arms including a two-terminal arm that includes K two-terminal unit converters connected in series, the unit converters being capable of outputting arbitrary voltages via energy storage elements having a voltage source characteristic, where K is a natural number of 1 or more; six arm current transformers (10) that detect three currents (IP_U, IP_V, and IP_W) flowing from the three P-side arms on the positive-side terminal side to the positive-side terminal and three currents (IN_U, IN_V, and IN_W) flowing from the three N-side arms on the negative-side terminal side to the negative-side terminal; a current calculation unit (27) that receives signals from the arm current transformers, and calculates and outputs AC currents (Iu = IP_U + IN_U, Iv = IP_V + IN_V, Iw = IP_W + IN_W) flowing from the three-phase AC terminals to the modular multilevel power converter, circulating currents (ICU = 1/2(IP_U - IN_U), ICV = 1/2(IP_V - IN_V), and ICW = 1/2(IP_W - IN_W)) from the N-side arms to the P-side arms, and a DC current (Idc = ICU + ICV + ICW) flowing from the negative-side terminal to the positive-side terminal; an AC current control calculation unit (28) that performs a three-phase to two-phase conversion on the AC currents, performs a comparison calculation of comparing a result of the three-phase to two-phase conversion with two-phase current command values (Iq_ref and Id_ref), and performs a two-phase to three-phase inverse conversion on a result of the comparison calculation to output a first voltage command (Vacu, Vacv, Vacw); a DC current control calculation unit (29) that outputs, as a second voltage command (Vdc), a result of a comparison calculation of comparing the DC current value Idc with a DC current command value; and a converter current control device (11) that adds the second voltage command to the first voltage command by an adder (56) and outputs a result of the addition as a voltage command (Vup, Vvp, Vwp) to the three P-side arms and a voltage command (Vun, Vvn, Vwn) to the three N-side arms, wherein the converter current control device includes: an average calculation unit (31) that calculates average voltage values (Vcup, Vcvp, and Vcwp) of the K energy storage elements of the P-side arms and average voltage values (Vcun, Vcvn, and Vcwn) of the K energy storage elements of the N-side arms; a calculation unit (39) that calculates positive/negative differential voltages (Vcu_pn, Vcv_pn, and Vcw_pn) between the average voltages of the P-side arms and the N-side arms; a dq-axis coordinate inverse converter (38) that performs a two-phase to three-phase inverse conversion on the two-phase current command values to calculate three-phase current command values (Iu_ref, Iv_ref, and Iw_ref); an output polarity determination unit (42) that, based on the three-phase current command values and a converter output command (P_com), inverts a sign of the three-phase current command values and outputs the sign-inverted three-phase current command values when a power generation operation is performed (P_com > 0) and outputs the three-phase current command values as they are when a motor drive operation is performed (P_ref ≤ 0); a circulating current command calculation unit (51) that includes multipliers (43) provided for the respective phases, the multipliers each receiving two signals of calculation outputs (Iu_out, Iv_out, and Iw_out) from the output polarity determination unit (42) and the positive/negative differential voltages, and sets outputs of the multipliers (43) as circulating current command values (Icu_ref, Icv_ref, and Icw_ref); a dq-axis coordinate converter (30) that performs three-phase to two-phase conversion on the circulating current command values with a phase (2θv) that is twice the positive sequence voltage phase (θv) of an AC system to output two-phase circulating current command values (Icq_ref and Icd_ref); a dq-axis coordinate converter (64) that performs three-phase to two-phase conversion on the circulating currents with a phase that is twice the positive sequence voltage phase to output two-phase circulating current feedback values (Icq_fb and Icd_fb); and a circulating current control calculation unit (37) that compares the two-phase circulating current command values with two-phase circulating current feedback values, inputs a result of the comparison to control calculation units (47, 48) including an integral element to output a two-phase voltage command (Vcq_ref, Vcd_ref), inputs the two-phase voltage command into a dq-axis coordinate inverse converter (38), and outputs a third voltage command (Vbu, Vbv, Vbw) obtained by inversely converting, by the dq-axis coordinate inverse converter (38), the two-phase voltage command with a phase twice the positive sequence voltage phase as a reference, and the third voltage command is added to the first voltage command and the second voltage command by an adder (57) to output a result of the addition as the voltage command to the three P-side arms and the voltage command to the three N-side arms.

# FIG.1

# FIG.2

FIG.3

# FIG.4

# FIG.5

# FIG.6

# FIG.7A

# FIG.7B

# FIG.8

# FIG.9

# FIG.10

# FIG.11

FIG.12

EP 4 651 360 A1

## FIG.13

VOLTAGE PULSATION RATE
r[%]

CAPACITOR VOLTAGE
Vc_max,Vc_ave,Vc_min [pu]

CAPACITOR CAPACITY COEFFICIENT: Kc[pu]

# FIG.14

# FIG.15

# FIG.16

# FIG.17

## INTERNATIONAL SEARCH REPORT

| International application No. |
| --- |
| **PCT/JP2023/000883** |

| A. | CLASSIFICATION OF SUBJECT MATTER |
| --- | --- |

*H02M 7/49*(2007.01)i; *H02M 7/48*(2007.01)i
FI: H02M7/49; H02M7/48 R

According to International Patent Classification (IPC) or to both national classification and IPC

| B. | FIELDS SEARCHED |
| --- | --- |

Minimum documentation searched (classification system followed by classification symbols)

H02M7/49; H02M7/48

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2022/059211 A1 (HITACHI MITSUBISHI HYDRO CORPORATION) 24 March 2022 (2022-03-24)<br>entire text, all drawings | 1-3 |
| A | JP 2017-143626 A (KABUSHIKI KAISHA TOSHIBA) 17 August 2017 (2017-08-17)<br>entire text, all drawings | 1-3 |
| A | WO 2016/136682 A1 (HITACHI MITSUBISHI HYDRO CORPORATION) 01 September 2016 (2016-09-01)<br>entire text, all drawings | 1-3 |
| A | JP 2021-145436 A (HITACHI, LTD.) 24 September 2021 (2021-09-24)<br>entire text, all drawings | 1-3 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **31 January 2023** | **07 February 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/000883**

| Patent document cited in search report | | | Publication date (day/month/year) | Patent family member(s) | | | Publication date (day/month/year) |
|---|---|---|---|---|---|---|---|
| WO | 2022/059211 | A1 | 24 March 2022 | (Family: none) | | | |
| JP | 2017-143626 | A | 17 August 2017 | (Family: none) | | | |
| WO | 2016/136682 | A1 | 01 September 2016 | US | 2018/0034399 | A1 | |
| | | | | EP | 3264583 | A1 | |
| | | | | CN | 107408899 | A | |
| JP | 2021-145436 | A | 24 September 2021 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5189105 B
- JP 5197623 B
- JP 6243083 B

- WO 2022059211 A
- JP 6618823 B
- JP 5827924 B